(19) Europäisches Patentamt
European Patent Office
Office européen des brevets

(11) **EP 4 034 262 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **20785448.0**

(22) Anmeldetag: **23.09.2020**

(51) Internationale Patentklassifikation (IPC):
**A62C 31/22** *(2006.01)*     **B23B 45/04** *(2006.01)*
**B23B 51/06** *(2006.01)*     **F03B 13/00** *(2006.01)*

(52) Gemeinsame Patentklassifikation (CPC):
**A62C 31/22; B23B 45/042; B23B 51/02; F03B 17/06;** B23B 2251/50; B23B 2270/025; F03B 13/00; F05B 2220/20; F05B 2220/602; Y02B 10/50; Y02E 10/30

(86) Internationale Anmeldenummer:
**PCT/EP2020/076607**

(87) Internationale Veröffentlichungsnummer:
**WO 2021/058590 (01.04.2021 Gazette 2021/13)**

(54) **BOHRLÖSCHGERÄT UND BOHRLÖSCHSYSTEM, BOHRER**

DRILLING EXTINGUISHING DEVICE AND DRILLING EXTINGUISHING SYSTEM, DRILL

DISPOSITIF D'EXTINCTION DE FORAGE ET SYSTÈME D'EXTINCTION DE FORAGE, FORET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2019   DE 102019125685**

(43) Veröffentlichungstag der Anmeldung:
**03.08.2022   Patentblatt 2022/31**

(73) Patentinhaber:
• **PUTZ INNOVA GmbH**
  **4822 Bad Goisern (AT)**
• **Traxl, Lukas**
  **4802 Ebensee (AT)**

(72) Erfinder: **TRAXL, Lukas**
**4802 Ebensee (AT)**

(74) Vertreter: **HGF**
**HGF Europe LLP**
**Neumarkter Straße 18**
**81673 München (DE)**

(56) Entgegenhaltungen:
**US-A- 3 865 194**

**Beschreibung**

Die vorliegende Erfindung betrifft ein Bohrlöschgerät und ein Bohrlöschsystem sowie einen Bohrer.

Im Feuerwehreinsatz gibt es Situationen, bei denen die aktuellen Ausrüstungsgegenstände keinen optimalen Einsatz gewährleisten können. Zum einen können Brände vor Eintreffen der Einsatzkräfte die sogenannte "Flashover"-Situation erreicht haben. Dies bedeutet, dass sich das Feuer durch Hitzestau und die daraus resultierende Ausgasung von Werkstoffen quer durch den Raum ausbreiten kann. Die Brandlast ist oftmals so groß, dass ein Innenangriff nicht mehr ohne große Risiken vollzogen werden kann. Zum anderen kann in derselben Situation ein Luftmangel vorherrschen, die Folge daraus ist ein fettes Rauchgasgemisch, das dazu neigt, auf eine Luftzufuhr hin schlagartig zu explodieren. Diese Luftzufuhr wird oftmals durch die Feuerwehr selbst hervorgerufen, was in der Vergangenheit zu folgenschweren Unfällen geführt hat.

Zur oftmals schwierigen thermischen Situation tragen die baulichen Gegebenheiten dazu bei, dass das Medium gar nicht den Brandherd erreicht. So wird durch herkömmliche Methoden oft-mals nur ein Wasserschaden erzeugt, währenddessen das Löschmittel gar nicht den Brandherd erreicht. Ein gewaltsames Öffnen bzw. Zerstören der Gebäudestruktur ist daher meist die Folge, welches mit enormem Aufwand und Risiko durch einen langwierigen Einsatz von schwerem Gerät und großem Personalaufwand vollzogen wird. Ein gutes Beispiel dazu sind Brände in der Zwischendecke, obwohl diese sehr klein beginnen, haben sie in der Vergangenheit aufgrund der schweren Zugänglichkeit zu Großbrände mit massiven Schäden geführt.

Zusätzlich besteht bei Bränden im Logistikbereich das Problem, dass gefährliche und oftmals unbekannte Stoffe in Transportbehältern in Brand geraten und bei Öffnen des Behälters dem Brandbekämpfer entgegenschlagen und sich oft schlagartig ausbreiten können.

Bisherige Lösungen kommen diesem Problem nur unzureichend bei.

In der US 3,865,194 ist ein Bohrlöschgerät beschrieben. Ein Gehäuse nimmt eine tangential angeströmte Turbine mit vergleichsweise großem Raddurchmesser und becherförmigen Schaufeln auf, welche über ein Stirnrad-Untersetzungsgetriebe eine abtriebsseitig ausgehöhlte Bohrwelle antreibt. Auf der Bohrwelle ist abtriebsseitig mittels eines Bajonettverschlusses ein Adapter angebracht, der an einem Bohrende eine Bohrkrone mittels einer Gewindeverschraubung aufnimmt. Der Adapter weist einen Kranz von achsenparallelen Bohrungen auf, die mit dem ausgehöhlten Abschnitt der Bohrwelle kommunizieren, zum Bohrende hin nach außen schräg abknicken und sich in einer Schulterfläche des Adapters zum Bohrende hin öffnen. Der ausgehöhlte Abschnitt der Bohrwelle kommuniziert seinerseits über seitliche Schlitze mit einer Ringkammer, die im gemeinsamen Gehäuse der Turbine, des Untersetzungsgetriebes und der Bohrwellenlagerung ausgebildet ist. Über einen Kükenhahn ist ein Fluid, insbesondere Löschwasser, der Turbine oder der Ringkammer oder beiden anteilig zuführbar. Im Betrieb kann zunächst die Turbine mit Löschwasser versorgt werden, um über das Untersetzungsgetriebe die Bohrwelle anzutreiben, um mittels der Bohrkrone ein Loch in ein Hindernis zu bohren. Sodann kann, ohne das Gerät abzusetzen, der Adapter weiter durch das Bohrloch in dem Hindernis gedrückt werden und kann mittels des Kükenhahns das Fluid anteilig oder vollständig der Ringkammer zugeführt werden, von wo es seinen Weg zu den Bohrungen in dem Adapter findet und aus den Öffnungen als Strahltrichter austritt. Auf diese Weise kann ein Raum hinter dem Hindernis mit Löschwasser versorgt werden. Wenn noch ein Anteil des Fluids auf die Turbine geleitet wird, rotiert auch der Strahltrichter, wodurch eine breitere Verteilung des Löschwassers erreicht werden kann. Über eine weitere Ventilvorrichtung stromaufwärts von dem Kükenhahn kann dem Löschwasser noch ein anderes Fluid, etwa Kohlendioxid, beigemischt werden.

Dieses vorbekannte Bohrlöschgerät ist vergleichsweise ausladend und schwer, daher schwierig in Brandsituationen zu transportieren und unhandlich im Einsatz. Die Zufuhr des Löschwassers über drehende Teile erfordert einen beträchtlichen Aufwand für die Abdichtung, die einer hohen mechanischen und thermischen Belastung ausgesetzt ist und nicht immer zuverlässig ist.

Aus der US 9,630,038 B2 ist ein Bohrlöschgerät bekannt mit einer Hydroturbine zum Antrieb eines Bohrbits über ein Richtungswechselgetriebe. Der Bohrbit ist hohl und an seiner Spitze mit Sprüh- und Diffusionsporen versehen und kann über eine Adapterhülse mit einem Bypass-Strom des Antriebsfluids für die Hydroturbine verbunden werden. Der Bohrbit kann für eine bestimmte Materialart eines Hindernisses angepasst sein (Karbonstahlbohrer für Eisen und Stahl, Diamantbohrer für Glas oder Diamant-Kernbohrer für Beton) oder ein Mehrzweckbit für mehrere Materialen sein. Zu den vorgenannten Problemen wie der Zufuhr des Löschwassers über drehende Teile kommt bei diesem Gerät noch der Nachteil hinzu, dass das Löschwasser über ein Verschleißteil, nämlich den Bohrbit, geführt wird, was den Herstellungsaufwand und die laufenden Kosten nochmals erhöht. Die Geometrie der Poren kann sich durch den Bohrvorgang oder ein Nachschleifen verändern, und die Poren können sich durch Bohrstaub zusetzen. Eine praktische Ausführung dieses Geräts ist nicht bekannt.

Aus der DE 101 52 757 A1 ist ein Durchschlaglöschgerät bekannt mit einer Nagelspitze, einer dahinter in einer Ringnut angeordneten Düsenanordnung, einer lanzenartigen Fluidzuführung mit einer Schlagfläche, und einem seitlich am hinteren Ende angesetzten Kugelhahn mit Schlauchkupplung. Dieses auch als "Fognail" vermarktete System dient dem Einschlagen etwa durch eine Tür, Leichtbauwand oder Holzverkleidung und unmittelbar darauf folgender Versprühung von Löschfluid durch die Düsenanordnung. Die Düsen sollen einen Wassernebel erzeugen und daher Löschfluid sparen und Wasserschäden minimieren. Es sind austauschbare Weitsprühköpfe und Breitsprühköpfe mit unterschiedlichen Düsenanordnungen vorgesehen. Das System weist auch einen Spezialhammer auf mit zwei Schlagseiten, von denen eine eine Schlagfläche zum Einschlagen des Geräts und die andere einen Dorn zum Vorschlagen eines Lochs, in welches der Dorn eingeführt werden kann, aufweist.

Dieses vorbekannte Durchschlaglöschgerät ist offensichtlich nur für leichte und vergleichsweise dünnwandige Hindernisse geeignet. Der Zugang durch dickere Wände oder komplexe Wand- oder Dachstrukturen ist damit nicht möglich. Es handelt sich also um ein Spezialwerkzeug mit eingeschränktem Einsatzfeld. Das Gerät hat nicht die Kapazitäten sowie die notwendige Baugröße und Eindringtechnik, um in modernen Wohnhäusern einen optimalen Löscherfolg bewirken zu können.

Demzufolge besteht eine Aufgabe der vorliegenden Erfindung darin, ein Gerät und ein System bereitzustellen, welche die oben genannten Nachteile im Stand der Technik wenigstens in Teilaspekten vermeiden oder zumindest verbessern.

Die Aufgabe wird mit einem Bohrlöschgerät mit den Merkmalen des unabhängigen Anspruchs 1, einem Bohrlöschsystem mit den Merkmalen des abhängigen Anspruchs 25 und einem Bohrer mit den Merkmalen des abhängigen Anspruchs 37 gelöst. Vorteilhafte Weiterbildungen sind in den hiervon jeweils abhängigen Unteransprüchen gekennzeichnet.

Ein Bohrlöschgerät nach einem Gesichtspunkt der Erfindung weist auf:

- eine Werkzeugaufnahme, welche zur Aufnahme eines Werkzeugs oder zur Verbindung mit einem Werkzeug ausgebildet ist,
- einen Fluidanschluss, welcher zum Zuführen eines Fluids ausgebildet ist;
- eine Turbine mit einem Laufrad, das wenigstens eine Stufe einer Vielzahl von Laufschaufeln aufweist und mit der Werkzeugaufnahme verbunden oder verbindbar ist, um diese in einer Antriebsbetriebsart unter Verwendung des über den Fluidanschluss zugeführten Fluids als Antriebsfluid drehend und/oder schlagend anzutreiben;
- wenigstens einer Abströmöffnung, welche in einer feststehenden Wandung des Bohrlöschgeräts ausgebildet ist und mit einer stromabwärts der Laufschaufeln der Turbine ausgebildeten Fluidkammer kommuniziert, und welche einen ersten Strömungsweg ausbildet, der dimensioniert ist, um das als Antriebsfluid zum Betrieb der Turbine in der Antriebsbetriebsart verwendete Fluid an eine Umgebung des Bohrlöschgeräts abzugeben,
- wobei die Turbine eine Axialturbine oder Rohrturbine ist und der Fluidanschluss einen axialen Zustrom der Fluids in das Bohrlöschgerät vorsieht.

Ein Bohrlöschgerät ist im Sinne der Erfindung ein Gerät, das sowohl eine Bohrfunktion in baulichen Hindernissen wie etwa Wänden, Türen, Decken, Dachkonstruktionen oder dergleichen als auch eine Löschfunktion durch Abgabe eines Löschmediums oder Löschfluids auszuführen. Eine Werkzeugaufnahme ist im Sinne der Erfindung ein Bauteil, welches drehend und/oder schlagend antreibbar ist und eine Verbindung zu einem ein Werkzeug wie etwa einen Bohrer oder Meißel oder dergleichen herstellt, und kann beispielsweise in Form eines Bohrfutters mit einer lösbaren Spann- oder Klemmfunktion zur lösbaren Aufnahme eines Werkzeugs ausgebildet sein. In einer anderen Ausführungsvariante kann eine Werkzeugaufnahme auch nur ein Innengewinde oder eine Flanschvorrichtung zum Ein- oder Anschrauben eines Werkzeugs wie eines Bohrers oder Meißels, eine Bajonettaufnahme oder dergleichen sein. Die Erfindung ist auch nicht auf Wechselwerkzeuge beschränkt sondern kann auch ein mit einer Antriebswelle fest verbundenes Werkzeug oder dergleichen aufweisen; in einem solchen Fall wäre die Verbindung zwischen Werkzeug und Antriebswelle eine Werkzeugaufnahme im Sinne der Erfindung. Ein Werkzeug im Sinne der Erfindung ist ein drehend oder/und stoßend wirkendes Werkzeug wie etwa ein Bohrer oder ein Meißel. Die Erfindung ist somit allgemein insbesondere auf die Anwendung von Werkzeugen gerichtet, die ein Hindernis bohrend, insbesondere spanend oder reibend oder schabend, oder/und zertrümmernd durchdringen oder zerstören. Ein Fluid kann jedes Fluid sein, das zum Antreiben einer Turbine und zum Löschen eines Brandes geeignet ist, beispielsweise und insbesondere Wasser. Eine Antriebsbetriebsart ist im Sinne der Erfindung eine Betriebsart, in welcher das Fluid ganz oder im Wesentlichen zum Antreiben der Werkzeugaufnahme genutzt wird. Eine Turbine ist eine Kraftmaschine, bei der die Strömungsenergie eines Antriebsfluids unmittelbar in Rotationsenergie umgesetzt wird. Unter einer Dimensionierung des ersten Strömungswegs so, dass das als Antriebsfluid zum Betrieb der Turbine in der Antriebsbetriebsart verwendete Fluid an eine Umgebung des Bohrlöschgeräts abzugeben, ist beispielsweise zu verstehen, dass ein Strömungsquerschnitt, der sich aus der Bauart der Turbine und den vorherrschenden Druckverhältnissen zwischen anströmendem und abströmendem Antriebsfluid in einem auslegungsgerechten Arbeitszustand der Turbine ergibt. Eine feststehende Wandung ist eine Wandung, die sich mit rotierenden Teilen des Bohrlöschgeräts wie dem Laufrad, der Werkzeugaufnahme, dem Getriebe etc. nicht mitdreht, nicht jedoch zwingend eine im Raum absolut unbewegliche Wandung. Wenn das Bohrlöschgerät selbst im Raum bewegt wird, bewegt sich dessen Wandung selbstverständlich mit.

Aufgrund des Austretens des Antriebsfluids über die in der feststehenden Wandung des Bohrlöschgeräts ausgebildete(n) Abströmöffnung(en) kann das Antriebsfluid auch in der Umgebung des Bohrlöschgeräts verteilt und sowohl direkt als Löschfluid zum Löschen von Flammen in der Umgebung des Bedieners als auch als Kühlfluid zum Kühlen der Umgebung, um das Entstehen von offenen Bränden in einer brandgefährdeten Umgebung zu unterdrücken, verwendet werden, ohne dass hierfür eine zusätzliche Fluidführung unter Umgehung der Turbine erforderlich wäre. Das austretende Fluid kann eine Fluidbarriere vor dem Bediener mit beträchtlichem Volumenstrom und beträchtlicher Wucht ausbilden und vor Flammenschlag schützen, der beim Durchdringen eines Hindernisses aus einem dahinter liegenden Raum abgegeben werden kann. Dies kann insbesondere dann verwirklicht werden, wenn die Abströmöffnungen ausgebildet sind, um das von der Turbine kommende Fluid in wenigstens überwiegend radialer Richtung an die Umgebung des Bohrlöschgeräts abzugeben. Der Bohrer oder das sonstige Werkzeug kann weiter arbeiten, während das Fluid die Umgebung kühlt. Als Fluid kommen grundsätzlich alle zum Betrieb der Turbine oder zum Löschen von Bränden geeigneten Fluide in Betracht, insbesondere Wasser, ggf. mit Zusätzen wie Schaumbildnern (Netzmittel) oder Gasen wie Kohlendioxid, Stickstoff etc. sowie Kombination beider in Form von Druckluftschaum, die insbesondere in der Löschbetriebsart zugemischt sein können.

Im Bohrer oder in der Werkzeugaufnahme müssen grundsätzlich keine Düsenbohrungen vorgesehen sein, die Abdichtung der drehenden Teile ist unproblematisch. Mit einem in der Werkzeugaufnahme aufgenommenen Bohrer kann ein Hindernis durchbohrt werden und danach sofort das Bohrlöschgerät durch die Bohrung nachgeschoben werden, um den hinter dem Hindernis vorherrschenden Brand über die Abströmöffnungen mit einem Fluid zu belegen und dadurch zu bekämpfen. Zusätzlich besteht die Möglichkeit bei Bränden von gefährlichen und/oder unbekannten Stoffen im Logistikbereich, bereits ohne Öffnen des Transportbehälters den Brand zu bekämpfen oder bei Beschädigungen austretende Stoffe präventiv zu neutralisieren und unter Einsatz möglicher Betriebsmittel wie Wasser, Gase, Schaumbildner (Netzmittel) oder Kombination dieser die Ausbreitung eines Gefahrenstoffes zu unterbinden.

Zusätzlich zu den oben beschriebenen Abströmöffnungen kann eine Düsenanordnung mit einer oder mehreren Düsen, die zum Abgeben des Fluids in einer feststehenden Wandung des Bohrlöschgeräts ausgebildet ist/sind und mit einer stromabwärts der Laufschaufeln der Turbine ausgebildeten der Fluidkammer kommuniziert/kommunizieren, um in einer Löschbetriebsart einen zweiten Strömungsweg auszubilden, um das Fluid nach Durchlaufen der Turbine als Löschfluid in einen das Bohrlöschgerät umgebenden Raum abzugeben, vorgesehen sein.

Das Bohrlöschgerät kann in einem eigenständigen Erfindungsgesichtspunkt auch alternativ zu den oben beschriebenen Abströmöffnungen die Düsenanordnung aufweisen. In diesem Fall können alle noch beschriebenen Eigenschaften und Vorteile, Ausführungsformen, Weiterbildungen und Abwandlungen gleichermaßen Anwendung finden.

Eine Löschbetriebsart ist im Sinne der Erfindung eine Betriebsart, in welcher das Fluid ganz oder im Wesentlichen zum Löschen eines Brandes genutzt wird. Die Antriebsbetriebsart kann beispielsweise dadurch verwirklicht werden, dass anstelle der oben beschriebenen Abströmöffnungen ein anderer Abströmweg vorgesehen ist. Falls die Düsenanordnung zusätzlich zu der/den oben beschriebenen Abströmöffnung(en) vorgesehen ist, können die Düsen das Fluid in anderer Form als die Abströmöffnung(en) abgeben und somit eine unterschiedliche Wirkung erzielen. Beispielsweise können die Abströmöffnungen das Fluid mit hoher Wucht abgeben, um die Umgebung quasi zu überschwemmen, können Düsen der Düsenanordnung als Nebeldüsen ausgebildet sein, um einen feinen Fluidnebel auszubilden der mit einer großen Oberfläche eine hohe Abkühlungswirkung durch rasche Verdampfung erzielen kann.

In jedem Fall können die Strömungsquerschnitte bzw. Strömungswiderstände so gewählt sein, dass beide Betriebsarten durch das Fluid gleichzeitig verwirklicht werden können. Andererseits kann eine Umschaltvorrichtung vorgesehen sein, welche die Strömungswege von der/den Abströmöffnung(en) oder einem anderen Abströmweg und der Düsenanordnung umschaltet. Eine solche Umschaltvorrichtung kann eine Verschlusseinrichtung sein oder aufweisen, die den Strömungsweg durch die Abströmöffnung(en) oder einen anderen Abströmweg wahlweise freigibt oder sperrt. Mit einer solchen Umschaltung wird somit lediglich eine Änderung des Strömungswegs stromabwärts der Turbine verwirklicht. Hierdurch kann ein und derselbe Fluidstrom wahlweise sowohl zum Antrieb als auch zum Löschen verwendet werden, ohne dass eine Umleitung des Fluids um die Turbine erforderlich wäre.

Wie gesagt, kann das Bohrlöschgerät mit Düsenanordnung und ohne Abströmöffnungen ausgebildet sein. Dies kann je nach Ausbildung (Düsenquerschnitt, Strömungswiderstand) der Düsenanordnung einen hohen Fluiddruck erfordern, um noch die Turbine betreiben zu können. Bei geringeren Fluiddrücken, insbesondere bei Niederdruck von maximal 16 bar, kann es sein, dass der Fluidstrom durch die Düsen nicht mehr ausreicht, um die Turbine sinnvoll zu betreiben. Das Vorsehen der Abströmöffnungen und insbesondere der Umschalteinrichtung es bei so niedrigem Druck ermöglichen, den Volumenstrom schlagartig zu erhöhen und den Betrieb der Turbine zum Antrieb der Werkzeugaufnahme sicherzustellen.

Es ist zu verstehen, dass die Antriebsbetriebsart und die Löschbetriebsart sich nicht völlig ausschließen müssen. Auch wenn die Umschalt- oder Verschlusseinrichtung in der zweiten Stellung die Abströmöffnung(en) sperrt, durchläuft das Fluid noch immer die Turbine. Dabei kann das Laufrad drehen, wobei aufgrund des hohen Strömungswiderstands der Düsen das übertragene Drehmoment gering sein kann. Andererseits kann aufgrund der Reibungswiderstände das Laufrad der Turbine in der Löschbetriebsart auch stillstehen. Umgekehrt kann in der ersten Stellung der Umschalt- oder Verschlusseinrichtung, in welcher die wenigstens eine Abströmöffnung freigegeben ist, ein gewisser Anteil des Fluids auch über die Düsen austreten, wobei der Durchsatz im Vergleich mit dem Durchsatz durch die Abströmöffnung(en) und die Strömungsgeschwindigkeit durch die Düsen gering sein kann.

Weil die Turbine eine Axialturbine oder Rohrturbine ist, kann das Bohrlöschgerät mit einem besonders schlanken und handlichen Design ausgebildet werden. Die Turbine kann wenigstens einen feststehenden Leitapparat mit einer Vielzahl von Leitschaufeln stromaufwärts einer Stufe der Laufschaufeln aufweisen, um die axiale Anströmung im optimalen Winkel auf die Laufschaufeln des Laufrads zu lenken. Die Leitschaufeln können mit der feststehenden Wandung des Bohrlöschgeräts verbunden oder einstückig damit ausgebildet sein.

Die Leitschaufeln und/oder die Laufschaufeln können ein Tragflächenprofil aufweisen, vorzugsweise ein NACA-Profil.

Besonders vorteilhaft ist die Turbine auf einen Überdruck des Fluids zwischen dem Fluidanschluss und der Umgebung von maximal etwa 16 bar ausgelegt ist. Ausrüstungen, Schläuche und Fittings sind heute in der Feuerbekämpfung und im Katastrophenschutz üblicherweise auf einen standardisierten Niederdruck von maximal 16 bar ausgelegt. Daher kann das Bohrlöschgerät gut in einer solchen Umgebung eingesetzt werden.

Es ist vorteilhaft, wenn der erste Strömungsweg an seiner engsten Stelle einen Strömungsquerschnitt aufweist, der größer oder viel größer als ein kumulierter Strömungsquerschnitt des zweiten Strömungswegs an der jeweils engsten Stelle aller Düsen ist, oder einen Strömungswiderstand aufweist, der kleiner oder viel kleiner als ein kumulierter Strömungswiderstand des zweiten Strömungswegs durch alle Düsen ist. Damit kann sichergestellt werden, dass das Fluid in der Antriebsbetriebsart zuverlässig im Wesentlichen durch die Abströmöffnungen austritt.

Die Turbine kann einen zentralen Staukegel aufweisen, um die von dem Fluidanschluss kommende Strömung auf einen durch das Laufrad und eine Wandung der Turbine oder des Bohrlöschgeräts gebildeten Ringkanal oder auf einen diesem Ringkanal entsprechenden Ringkanal eines Leitapparats mit Leitschaufeln zu leiten.

Vorzugsweise ist eine vorzugsweise auf einer Abtriebswelle der Turbine angeordnete, insbesondere kegelförmige Umlenkeinrichtung vorgesehen, welche ausgebildet ist, um einen von der der Turbine kommenden Fluidstrom zu den Abströmöffnungen zu lenken, und welche ein vorderes Ende der Fluidkammer ausbildet. So können unerwünschte Strömungswiderstände verringert oder vermieden werden.

Es ist vorteilhaft, wenn das Bohrlöschgerät eine in etwa rohrartige Form aufweist. Dadurch kann die Handhabung und der Transport des Bohrlöschgeräts, insbesondere dessen Mitführung durch Brandbekämpfungskräfte, beträchtlich erleichtert werden. Es wird im Weiteren angenommen und definiert, dass der Fluidanschluss an einem hinteren Stirnende des Bohrlöschgeräts angeordnet ist und die Werkzeugaufnahme an einem vorderen Stirnende des Bohrlöschgeräts angeordnet ist.

Der Fluidanschluss kann vorteilhaft einen axialen Zustrom des Fluids in das Bohrlöschgerät vorsehen. Dadurch werden durch den Zustrom des Fluids keine Drehkräfte aufgebracht, die vom Bediener aufgefangen werden müssen.

Wenn die Umschalt- oder Verschlusseinrichtung einen rohrförmigen oder in etwa rohrförmigen Schieber aufweist, der die Abströmöffnungen wahlweise vollständig oder anteilig freigibt oder verdeckt, kann die Umschaltung durch einfaches Verschieben des Schiebers an der Mantelfläche des Bohrlöschgeräts erfolgen.

Die Umschalt- oder Verschlusseinrichtung kann eine Feder aufweisen, welche den Schieber in Sperr-Richtung vorspannt. Die Umschalt- oder Verschlusseinrichtung kann ferner ein Zugmittel, insbesondere Seilzug oder Bowdenzug, aufweist, welches an dem Schieber in Freigaberichtung angreift. Dadurch kann die Bedienung der Umschalt- oder Verschlusseinrichtung besonders vereinfacht werden.

Es kann eine vorzugsweise auf einer Abtriebswelle der Turbine angeordnete, insbesondere kegelförmige Umlenkeinrichtung vorgesehen sein, welche ausgebildet ist, um eine Abströmung der Turbine zu den Abströmöffnungen zu lenken, und welche ein vorderes Ende der Fluidkammer ausbildet.

Zwischen einer Abtriebswelle der Turbine und der Werkzeugaufnahme kann ein Getriebe, insbesondere Untersetzungsgetriebe, angeordnet und in den Kraftweg gekoppelt oder koppelbar sein, um die Drehzahl der Turbine auf eine zum Bohren geeignete Drehzahl zu bringen. Dabei kann das Getriebe mehrere Über- oder Untersetzungsgänge aufweisen, um die Drehzahl an unterschiedliche Bohrwiderstände und Materialien anzupassen. Die Bohrgeschwindigkeit kann alternativ oder zusätzlich auch durch den Anströmüberdruck beeinflusst werden. Wenn das Getriebe in der Form eines Planetengetriebes ausgebildet ist, kann es besonders platzsparend in einem rohrförmigen Körper untergebracht werden.

Zur Unterstützung der Bohrfunktion oder auch zum Erzielen einer ausschließlichen Hämmerfunktion kann zwischen einer Abtriebswelle der Turbine und der Werkzeugaufnahme ein Schlagwerk in den Kraftweg gekoppelt oder koppelbar sein.

Es ist für die Montage besonders vorteilhaft, wenn axial aufeinanderfolgend angeordnete Teile des Bohrlöschgeräts über Verschraubungen miteinander verbunden sind, wobei die Verschraubungen jeweils durch ein Innengewinde in einer Wandung des einen Teils und ein Außengewinde in einer Wandung des anderen Teils gebildet sind. Die Wandungen aller axial aufeinanderfolgend verbundenen Teile kann insgesamt die Wandung des Bohrlöschgeräts ausbilden.

Wenn die Düsen als Nebeldüsen ausgebildet sind, die einen feinen Sprühnebel erzeugen, ist das Gerät besonders wirksam. Mit einer feinen Zerstäubung wird die Fläche des Löschmittels vervielfacht und der Wärmeentzug durch Verdampfung gefördert. Der sich schlagartig ausbreitende Wasserdampf verhindert das Ansaugen von Luft und der Sauerstoffmangel erstickt schlussendlich die Flammen, nach kurzer Einwirkzeit wird durch die hohe Löscheffizienz das Energieniveau des Brandes soweit herabgesenkt, dass ein Innenangriff zum Löschen des Brandherdes mit enorm geminderter Gefahr möglich ist. Der Wasserschaden wird in weiterer Folge auf ein Minimum beschränkt.

Wenn die Düsen sowohl in der ersten als auch in der zweiten Stellung der Umschalt- oder Verschlusseinrichtung mit der Fluidkammer kommunizieren, kann der Aufbau der Umschalt- oder Verschlusseinrichtung besonders einfach gehalten werden. Wegen des hohen Strömungswiderstands durch die Düsen kann eine Sperrung des Strömungswegs durch die Düsen in der Antriebsbetriebsart entbehrlich sein.

Die Düsen können durch Schrägbohrungen in einer Wandung des Bohrlöschgeräts ausgebildet sein, sodass eine vorteilhafte Richtwirkung, insbesondere nach schräg vorn, des Düsenstrahls erzielt wird. Dabei können die Bohrungen auch eine zylindrische oder spitzkegelige Senkung an ihrem stromabwärtigen Ende aufweisen, um die Wirkung der Düsen zu optimieren.

Auch können an einer Außenfläche des Bohrlöschgeräts axiale Nuten ausgebildet sind, die sich von Austrittsöffnungen der Düsen aus axial in Richtung des vorderen Endes des Bohrlöschgeräts erstrecken, um die Wirkung der Düsen weiter zu verbessern und ein Zusetzen der Düsenöffnungen beim Bohren zu vermeiden.

Die Vernebelungswirkung der Düsenanordnung kann weiter verbessert werden, wenn sie wenigstens zwei Gruppen von Düsen aufweist, deren Düsen sich ringförmig über den Umfang des Bohrlöschgeräts verteilt öffnen und in Umfangsrichtung und/oder in axialer Richtung zu den Düsen der jeweils anderen Gruppe(n) versetzt sind. Die Düsenanordnung kann auch wenigstens zwei Gruppen von Düsen aufweisen, deren Düsen unterschiedliche Austrittswinkel aufweisen, sodass ein breit aufgefächerter Strahlnebel erzeugt werden kann.

Das Bohrlöschgerät kann vorteilhaft in einem Bohrlöschsystem verwendet werden, um einen weiteren Erfindungsgesichtspunkt zu bilden. Das Bohrlöschsystem dieses Erfindungsgesichtspunkts weist weiter eine Halterung mit einer Gerätekupplung und einen Schlauchanschluss auf. Der Schlauchanschluss ist dabei zur Verbindung mit einem Schlauch, vorzugsweise Feuerwehrschlauch, insbesondere in Form einer Flanschverbindung, ausgebildet. Die Gerätekupplung ist zur Verbindung mit dem Fluidanschluss auf der Seite des Bohrlöschgeräts an einer Zuströmöffnung des Bohrlöschgeräts ausgebildet. Die Zuströmöffnung ist dabei dem Fluidanschluss des Bohrlöschgeräts zugeordnet. Alle Fluidanschlüsse und fluidführenden Teile können auf einen Niederdruck nach Feuerwehrnorm von beispielsweise maximal 16 bar ausgelegt sein.

Das Bohrlöschsystem kann weiter eine Auslösevorrichtung aufweisen, die mit der Umschalt- oder Verschlussvorrichtung des Bohrlöschgeräts in Wirkverbindung steht oder bringbar ist, um die Umschaltung von der erste Stellung in die zweite Stellung zu verwirklichen. Hierzu kann die Auslösevorrichtung einen handbetätigbaren Hebel aufweisen. Ferner kann die Auslösevorrichtung mit einem Zugmittel der Umschalt- oder Verschlussvorrichtung gekoppelt oder koppelbar sein.

Die Halterung des Bohrlöschsystems kann zur erleichterten Handhabung durch eine Brandbekämpfungsperson einen Handgriff und eine Schulterstütze aufweisen.

Für den Einsatz an einem beweglichen Gerät kann die Halterung eine Maschinen- oder Geräte- oder Fahrzeugaufnahme aufweisen.

Wenn die Halterung einen sich zwischen dem Schlauchanschluss und der Kupplung erstreckenden Rohrkörper aufweist, kann ein insgesamt rohrförmiger Körper mit dem rohrförmigen Bohrlöschgerät hergestellt werden, was die Handhabung weiter verbessern kann.

Das Bohrlöschsystem kann einen Bohrer aufweisen, der aufweist:

- einen Schaft an einem hinteren Ende des Bohrers, der in die Werkzeugaufnahme einsetzbar ist,
- einen Kopf, der sich von dem Schaft aus nach vorn erstreckt,
- eine Stirnfläche, welche eine oder mehrere, vorzugsweise zwei oder vier, Schneidkanten trägt, und
- eine Zentrierspitze, die sich von der Stirnfläche aus nach vorn erstreckt.

Mit der besonderen Bauart und dem besonderen Schliff kann der Bohrer eine Multiversatilität im Hinblick auf eine Vielzahl von Materialen eines Hindernisses, das einen Zugang zu einem brennenden Raum oder Gebäude versperrt, aufweisen, sodass beispielsweise Holz, Holzwerkstoffe, Kunststoffe, Verbundstoffe, Glas, Stein, Faserplatte, Beton, Metalle und Dämmstoffe gleichermaßen durchtrennt werden können. Der Kopf kann eine Wendelung aufweisen, wobei die Wendelung vorzugsweise eine Anzahl von Wendeln aufweist, die der Anzahl der Schneidkanten entspricht.

Vorteilhaft kann die Stirnfläche des Bohrers um eine Mittelachse rotierend einen Querschnitt abdecken, der gegenüber einem größten Querschnitt des Bohrlöschgeräts wenigstens in einem vorderen Bereich des Bohrlöschgeräts ein Übermaß von wenigstens 1 mm, insbesondere wenigstens 2 mm, besonders bevorzugt mindestens 4 mm aufweist. Bei einem beispielhaft maximalen Gerätedurchmesser von 50 mm kann daher die Stirnfläche des Bohrers um eine Mittelachse rotierend einen Querschnitt mit einem Durchmesser von wenigstens 51 mm, insbesondere wenigstens 52 mm, besonders bevorzugt mindestens 54 mm abdecken. Ein vorderer Bereich des Bohrlöschgeräts kann ein Bereich sein, der von dem vorderen Ende bis über die Abströmöffnung(en) und/oder Düse(n) hinaus reicht, und zwar vorzugsweise um eine Länge, die einer Länge des Kopfs des Bohrers bzw. einer Dicke eines erwarteten Hindernisses entspricht. So kann nach Durchdringen des Hindernisses durch den Bohrer das Bohrlöschgerät mindestens einschließlich der Düsenanordnung durch das Bohrloch gesteckt und unmittelbar mit dem Löschen in der Löschbetriebsart begonnen werden.

Für den Einsatz üblicher Wand- und Dachstärken kann der Kopf des Bohrers eine Länge von mindestens 150 mm, vorzugsweise mindestens 250 mm, besonders bevorzugt mindestens 400 mm aufweisen. Die Kopflänge kann an eine Stärke eines zu durchbohrenden Hindernisses angepasst sein. Durch eine lange Kopflänge kann der Bohrer auch in Bohrlöchern von variablem Materialaufbau eine ausreichende Seitenführung erfahren. Mit einer Gesamtlänge von maximal 1000 mm kann der Bohrer in einer Einsatzsituation noch handhabbar sein.

Vorzugsweise ist die Stirnfläche negativ oder stumpf angeschliffen, so dass die Schneidkante gegenüber einer zu einer Bohrermittelachse senkrechten Ebene einen Anschliffwinkel aufweist, dessen Betrag höchstens 10°, vorzugsweise höchstens 8°, insbesondere höchstens 6°, besonders bevorzugt höchstens 4° beträgt, oder flach ist. Ein Schneidwinkel der Schneidkante kann unter 90° aber jedenfalls über 60° ausgebildet sein.

Der Bohrer kann einteilig oder mehrteilig sein. Beispielsweise kann der Kopf als Plattenträger ausgebildet sein, der eine Nut zur Aufnahme einer Schneidplatte aufweist, wobei die Stirnfläche mit der Schneidkante und der Zentrierspitze an der Schneidplatte ausgebildet ist.

Die Schneidengeometrie ist als eine Kombination bewährter Geometrien aus anderen Bereichen entwickelt. Merkmale können eine Zentrierspitze und eine flache bis negativ angestellte Schneidengeometrie sein, um bei Blechkonstruktionen den notwendigen Schnittdruck ausüben zu können. Der Schneidwinkel selbst kann vorzugsweise sehr stumpf ausgeführt sein, um im weichen Holz befindliche Nägel oder Schrauben genauso zerspanen zu können, ohne eine signifikante Beschädigung der Kante zu erleiden.

Weitere und spezielle Aufgaben, Merkmale und Vorteil werden aus der nachstehenden Beschreibung von Ausführungsbeispielen ersichtlich werden.

Die Erfindung wird nun anhand von derzeit bevorzugten Ausführungsbeispielen unter Bezugnahme auf beigefügte Zeichnungen beispielhaft erläutert. Es zeigen dabei:

Figur 1:  ein Bohrlöschgerät gemäß einem Ausführungsbeispiel der vorliegenden Erfindung in einem geschlossenen Zustand eines Schiebers in einer perspektivischen Ansicht;

Figur 2:  das Bohrlöschgerät von Figur 1 in einem geöffneten Zustand des Schiebers;

Figuren 3A-3C:  das Bohrlöschgerät in dem Zustand von Fig. 2 in einer Seitenansicht, einer Draufsicht in Blickrichtung eines Pfeils B in Figur 3A und einer Querschnittsansicht in Blickrichtung von Pfeilen und entlang einer Ebene C-C in Figur 3A;

Figuren 4A-4C:  das Bohrlöschgerät in dem Zustand von Figur 1 in einer Draufsicht entsprechend Figur 3B, einer Längsschnittansicht entlang einer axialen Mittelebene von Figur 4A und einer Querschnittsansicht in Blickrichtung von Pfeilen und entlang einer Ebene C-C in Figur 4B;

Figuren 5A-5C:  das Bohrlöschgerät in dem Zustand von Figur 1 in einer Seitenansicht entsprechend Figur 3A, einer Längsschnittansicht entlang einer axialen Mittelebene von Figur 5A und einer Querschnittsansicht in Blickrichtung von Pfeilen und entlang einer Ebene C-C in Figur 5B;

Figur 6A:  eine Einzelheit VI von Figur 5B in vergrößerter Darstellung;

Figur 6B:  eine Querschnittsansicht des Bohrlöschgeräts in Blickrichtung von Pfeilen und entlang einer Ebene B-B in Figur 6A;

Figuren 7A-7C:  eine Seitenansicht, eine teilgeschnittene stirnseitige Ansicht und eine teilgeschnittene perspektivische endseitige Ansicht eines Leitapparats einer Turbine in dem Bohrlöschgerät von Figur 1;

Figuren 8A-8C:  eine Seitenansicht, eine teilgeschnittene stirnseitige Ansicht und eine teilgeschnittene perspektivische stirnseitige Ansicht eines Laufrads der Turbine in dem Bohrlöschgerät von Figur 1;

Figur 9:  eine explodierte Seitenansicht des Leitapparat und des Laufrads von Figuren 7A-8C;

| | |
|---|---|
| Figuren 10A, 10B: | jeweils eine geschnittene Teilansicht zur Darstellung von Strömungswegen im geöffneten bzw. geschlossenen Zustand des Schiebers; |
| Figuren 11A, 11B und 12: | geschnittene perspektivische Teilansichten zur Veranschaulichung eines inneren Aufbaus des Bohrlöschgeräts; |
| Figur 13: | eine Seitenansicht eines Bohrers zur Verwendung in dem Bohrlöschgerät von Figur 1; |
| Figuren 14A-14C: | eine perspektivische Ansicht, eine Seitenansicht und eine Vorderansicht eines Bohrlöschsystems mit dem Bohrlöschgerät von Figur 1 in manueller Einsatzkonfiguration; |
| Figuren 15A-15C: | Seitenansichten des Bohrlöschgeräts von Figur 1 in verschiedenen Betriebsarten; |
| Figur 16: | eine perspektivische Ansicht einer Schneidplatte für einen Bohrer einer Ausführungsvariante zur Verwendung in dem Bohrlöschgerät von Figur 1; und |
| Figuren 17A-17C: | Ansichten der Schneidplatte von Figur 16, die dort mit Pfeilen A, B und C gekennzeichnet sind. |

Die Zeichnungen sind rein schematisch und dienen allein der Veranschaulichung des Prinzips und der Wirkungsweise der vorliegenden Erfindung, nicht der Ableitung konkreter Größenabmessungen, sofern nicht ausdrücklich auf solche Bezug genommen wird. Es sollte verstanden werden, dass die zeichnerische Darstellung dem Verständnis der vorliegenden Erfindung dient und konstruktive Details, die auf die grundlegende erfindungsgemäße Wirkungsweise keinen Einfluss haben, in der Zeichnung weggelassen sein können. Umgekehrt ist zu verstehen, dass nicht jedes in den Zeichnungen gezeigte konstruktive Detail zur Verwirklichung des Erfindungsgedankens zwingend vorhanden oder wie gezeigt ausgebildet sein muss. Der Fachmann wird die gezeigten Ausführungsbeispiele nach seinen Bedürfnissen abändern, umgestalten oder ergänzen, ohne von den die Erfindung kennzeichnenden Merkmalen abzuweichen.

Eine Ausführungsform der Erfindung ist ein Bohrlöschgerät 1, welches aus eigenem Antrieb Hindernisse wie insbesondere Gebäudestrukturen durchdringen kann und danach Löschwasser in einen Raum hinter der geschaffenen Öffnung einbringen kann. Die Durchdringung erfolgt durch das Durchbohren von Dächern und Wänden. Die Antriebsleistung des Bohrwerks wird dem Löschmittel entnommen, indem dessen hydraulische Energie in Rotationsenergie umgewandelt wird. Die Umwandlung kann durch eine für den Anwendungsfall speziell ausgelegte Propeller-Rohrturbine erfolgen, die durch einen abgelenkten Fluidstrom am Austritt der Turbine gekennzeichnet ist.

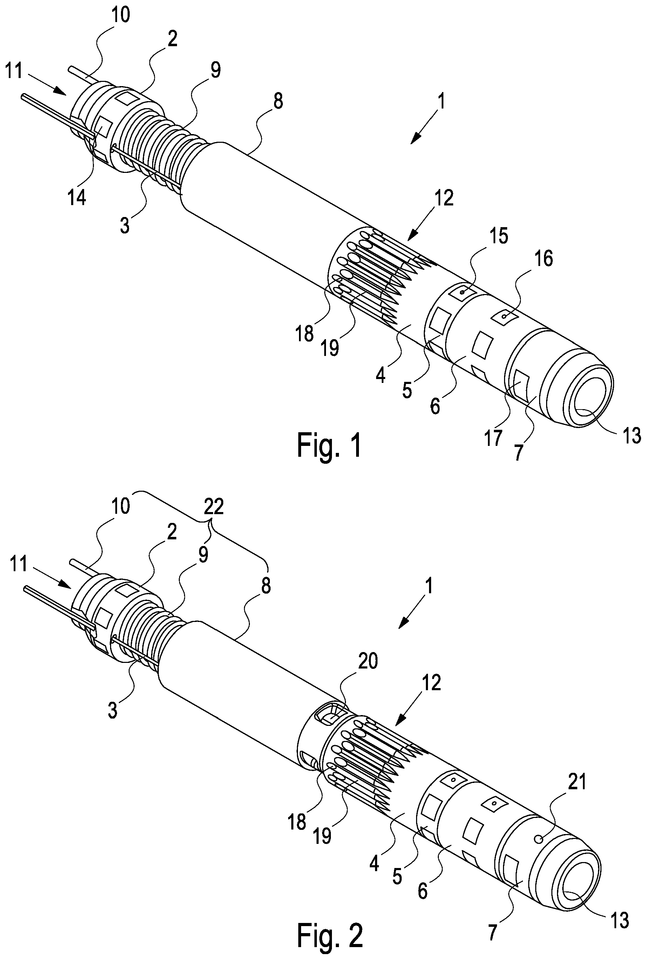

Das Bohrlöschgerät 1 eines bevorzugten Ausführungsbeispiels ist in seiner äußeren Erscheinungsbild in etwa rohrförmig ausgebildet (Figuren 1, 2 ff.). Es weist aufeinanderfolgend von einer Einströmöffnung 11 bis zu einer Werkzeugaufnahmeöffnung 13 einen Adapterstück 2, ein Distanzrohr 3, ein Düsengehäuse 4, eine Getriebeeinheit 5, ein Zwischenstück 6 und ein Bohrfutter 7 auf (Figuren 1, 2 u.a.). An dem Düsengehäuse 8 ist ein Schieber 8 verschiebbar gelagert und durch einen Rückstellmechanismus hier in Form einer Feder 9, nämlich Spiralfeder, gegen das Adapterstück 2 vorgespannt. Ein Zugmittel 10 greift an dem Schieber 8 an, so dass der Schieber 8 gegen die Wirkung der Feder 9 zurückziehbar ist. Der Schieber 8, die Feder 9 und das Zugmittel 10 bilden eine Umschalteinrichtung 22, die als Verschlusseinrichtung ausgebildet ist, welche eine erste Stellung, in welcher der Schieber 8 zurückgezogen ist (Figur 2), und eine zweite Stellung, in welcher der Schieber 8 an einer Anschlagkante des Düsengehäuses anliegt (Figur 1) definieren kann. In der ersten Stellung (Figur 2) sind mehrere Abströmöffnungen 20 freigelegt, die in der Wandung des Düsengehäuses 4 ausgebildet sind und die in der zweiten Stellung (Figur 1) durch den Schieber 8 abgedeckt sind.

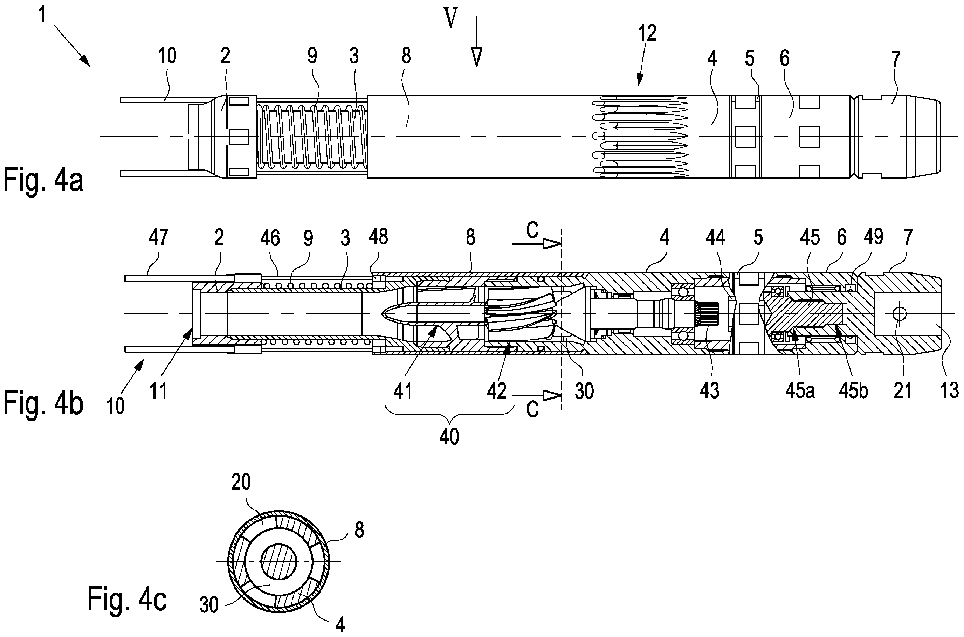

An dem Adapterstück 2 ist eine Einströmöffnung 11 ausgebildet, welche auch ein hinteres Ende des Bohrlöschgeräts 1 bildet. An dem Düsengehäuse 4 ist eine Düsenanordnung 12 ausgebildet, die mit der Einströmöffnung 11 kommuniziert. An der Werkzeugaufnahme 7 ist eine Einführungsöffnung 13 ausgebildet, welche auch ein vorderes Ende des Bohrlöschgeräts 1 bildet. Die Werkzeugaufnahme 7 kann als ein Bohrfutter ausgebildet sein. Zur Feststellung oder Sicherung eines Werkzeugs kann in einer Wandung der Werkzeugaufnahme 7 ein Gewindestift 21 vorgesehen sein (Figuren 2, 4A).

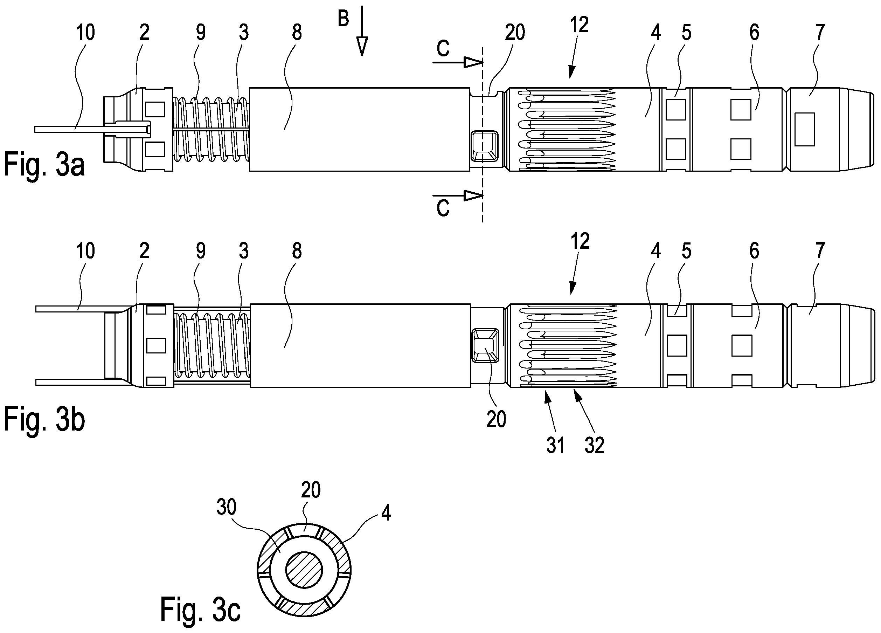

Die Düsenanordnung 12 weist eine Vielzahl von Düsen 18 auf, die eine Wandung des Düsengehäuses 4 durchdringen, und die sich in achsparallelen Nuten 19 zum vorderen Ende 13 hin fortsetzen. Die Düsen 18 können in zwei axial beabstandeten Reihen oder Kränzen 31, 32 (Figur 3C) über den Umfang des Düsengehäuses 4 verteilt angeordnet sein, wobei die Reihen 31, 32 auch um einen halben Abstand der Düsen 18 in einer Reihe 31, 32 in Umfangsrichtung versetzt sein können. Das Adapterstück 2, das Düsengehäuse 4, die Getriebeeinheit 5, das Zwischenstück 6 und die Werkzeugaufnahme 7 weisen jeweilige Schlüsselflächen 14, 15, 16, 17 auf, mittels welcher die Teile gegeneinander verschraubbar sind, wie weiter unten genauer beschrieben werden wird. Die Düsen 18 wie auch die Abströmöffnungen 20 können mit einer beispielhaft ringförmig ausgebildeten Fluidkammer 30 kommunizieren, die innerhalb des Düsengehäuses 4 ausgebildet ist (Figuren 3A, 3B, 3C, 4A, 4B u.a.).

Das Zugmittel 10 kann als oder in der Art eines Bowdenzugs ausgebildet sein und ein oder mehrere Seil(e) 46 aufweisen, die jeweils in einer Hülle 47 geführt sind und in einer Endkappe 48 enden (Figur 4B). Die Endkappe 48 kann in dem Schieber 8 gelagert sein, und die Hülle 47 kann sich an dem Adapterstück 2 abstützen, während das Seil 46 über das Distanzrohr 3 hinweg frei verlaufen kann.

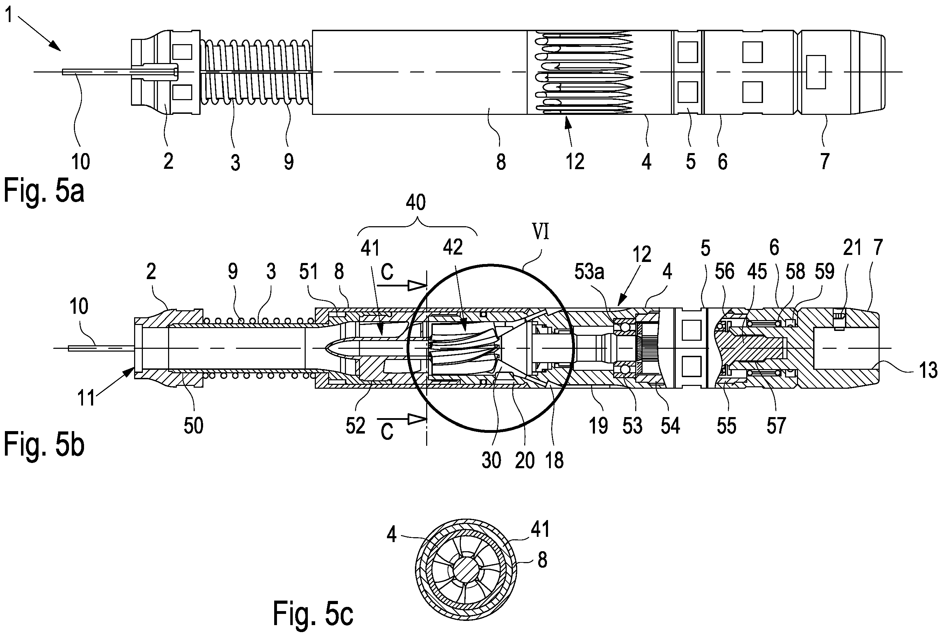

Das Bohrlöschgerät 1 weist eine Propeller-Rohrturbine oder Axialturbine (nachstehend kurz: Turbine) 40 auf, welche mit der Einströmöffnung 11 kommuniziert und die Werkzeugaufnahme 7 rotatorisch antreibt (Figuren 4B, 5B u.a.). Die Turbine 40, die auch als DEFLOW-Turbine bezeichnet wird, kann einen Leitapparat 41 und ein Laufrad 42 aufweisen. Das Laufrad 42 kann am Abtriebsende eine Wellenverzahnung 43 aufweisen, die der Kopplung mit einer Antriebswelle 44 der Getriebeeinheit 5 dient. Eine Abtriebswelle 45 der Getriebeeinheit 5 kann mit der Werkzeugaufnahme 7 fest gekoppelt oder in lösbarer Weise koppelbar sein.

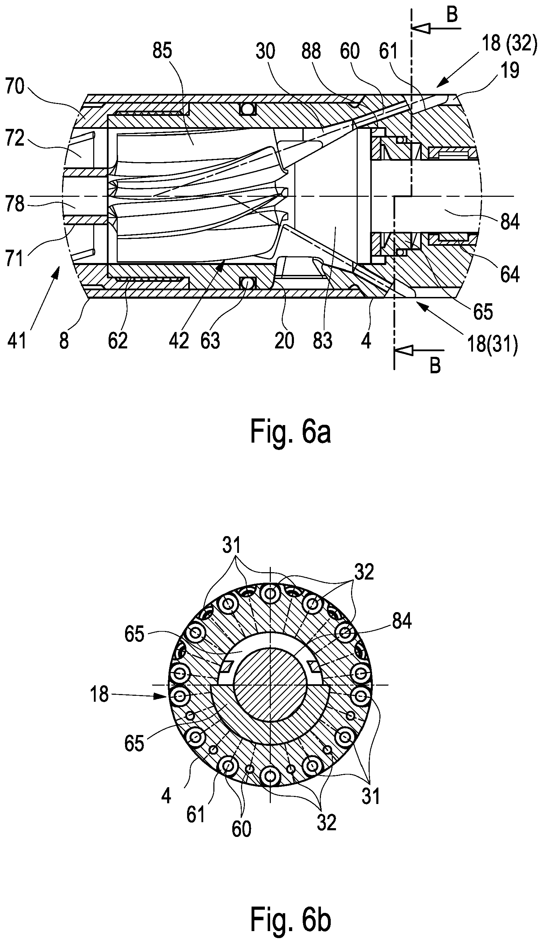

Das Zwischenrohr 3 kann mittels einer Verschraubung 50 mit dem Adapterstück 2 verbunden sein, der Leitapparat 41 der Turbine 40 kann mittels einer Verschraubung 52 mit dem Zwischenrohr 3 verbunden, das Düsengehäuse 4 kann mittels einer Verschraubung 62 mit dem Leitapparat 41 verbunden sein, die Getriebeeinheit 5 kann mittels einer Verschraubung 54 mit dem Düsengehäuse 4 verbunden sein, und das Zwischenstück 6 kann mittels einer Verschraubung 55 mit der Getriebeeinheit 5 verbunden sein, sodass das Adapterstück 2, das Zwischenrohr 3, der Leitapparat 41, das Düsengehäuse 4, die Getriebeeinheit 5 und das Zwischenstück 6 axial hintereinander angeordnet sind und einen rohrartigen Körper ausbilden (Figuren 5B, 6A).

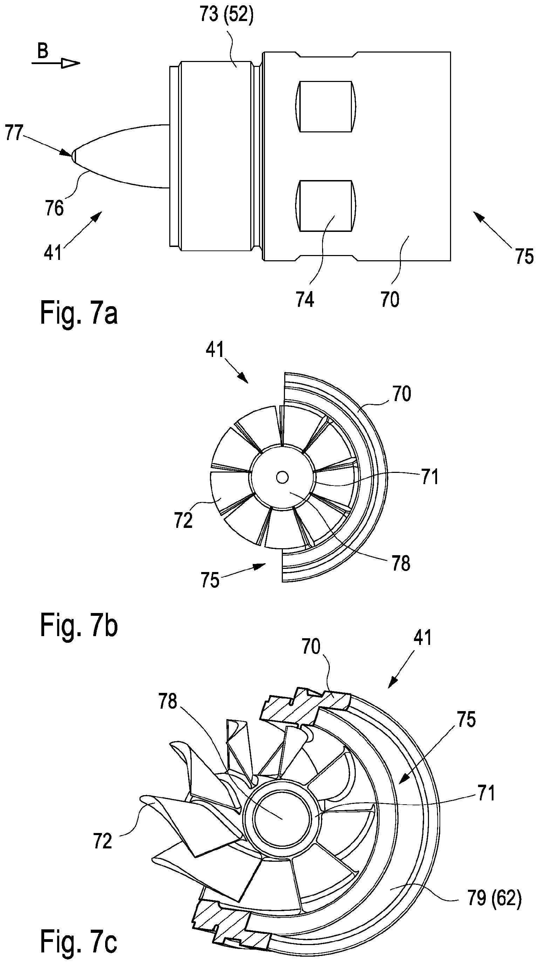

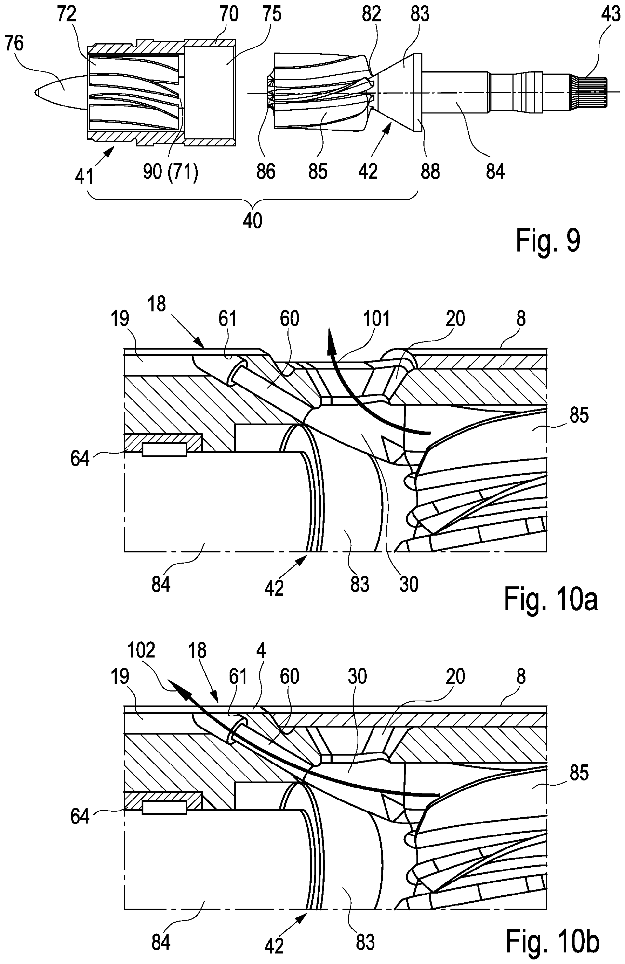

Der Leitapparat 41 ist ein stationäres Bauteil, welches einen Käfig 70, einen Strömungsteiler 71 und mehrere Leitschaufeln 72 aufweisen kann (Figuren 7A-7C). Die Leitschaufeln 72 können sich zwischen dem Strömungsteiler 71 und dem Käfig 70 erstrecken. Der Strömungsteiler 71 kann in einem Stück mit den Leitschaufeln 72 verbunden sein. Der Käfig kann stromaufwärts ein Außengewinde 73 aufweisen, das ein Teil der Verschraubung 52 mit dem Distanzrohr 3 ist. Ferner können einige Schlüsselflächen 74 vorgesehen sein, welche die Verschraubung erleichtern. Stromabwärts kann der Käfig einen Aufnahmeraum 75 aufweisen, welcher der Aufnahme eines stromaufwärtigen Endes des Düsengehäuses 4 und des Laufrades 42 dient (Figuren 6A, 9). Der Strömungsteiler 71 läuft stromaufwärts in einem Anströmende 76 mit einem Staupunkt 77 aus. Der Strömungsteiler 71 kann stromabwärts hohl ausgeführt sein, um Masse zu sparen, was auch bei der Herstellung, etwa durch einen Lasersinterprozess, vorteilhaft sein kann, und somit einen Hohlraum 78 aufweisen. Der Käfig 70 kann im Bereich des Aufnahmeraums 75 auch ein Innengewinde 79 aufweisen, das ein Teil der Verschraubung 62 mit dem Distanzrohr 3 ist. Die Leitschaufeln 72 können durch einen Wellenstumpf 90 zum Aufnahmeraum hin freigestellt sein (Figur 9).

Mittels der Leitschaufeln 72 kann die Strömung auf das nachgeschalteten Laufrad 42 gelenkt werden. Der dabei entstehende Drall der Strömung kann vom Laufrad 42 der Turbine 40 abgebaut werden. In einem Ausführungsbeispiel können neun Leitschaufeln 72 vorgesehen sein. Die Schaufelgeometrie kann entsprechend NACA-Tragflächenprofilen ausgelegt sein, welche den Leitwinkel zum Durchmesser konstant beibehalten, wodurch sich eine Verwindung der Schaufeln ergeben kann. Natürlich können auch Tragflächenprofile gewählt werden, die nicht Bestandteil einer NACA-Liste sind. Um das Bauteil zu fertigen, kann vorteilhaft das SLM-Verfahren (Stahl-3D-Druck) angewendet werden.

Die Auslegung des Profils kann anhand fachnotorischer Verfahrensweisen auf die gewünschten Strömungseigenschaften hin erfolgen. NACA-Profile beruhen auf der Vorstellung von Kreisen, die auf einer Linie, der Profilmittellinie, gezeichnet werden. Um diese Kreise wird eine tangentiale Umrisslinie gelegt, welche die Profilformlinie bildet. NACA-Profile werden in Serien anhand charakteristischer Parameter definiert. Eine vierstelliges NACA-Serie kann beispielsweise durch die Parameter maximale Wölbung m in % der Profiltiefe, Wölbungsrücklage p in Zehnteln der Profiltiefe, maximale Profildicke tt (zwei Stellen) in % der Profiltiefe, ggf. unter zusätzlicher Angabe eines Index für den Nasenradius a und die Dickenrücklage b angegeben werden. Andere Serien verwenden andere Parameter und/oder andere Herangehensweisen für die Profildefinition. Um die genaue Krümmung zu erreichen, erfolgt eine komplexer Berechnungsprozess, der sich bei jeder Konstruktion sukzessive an die Bedingungen annähern muss. Somit sind die Parameter der NACA Profile für jede Konstruktion angepasst und mit den notwendigen Winkeln und Dickenverhältnissen ausgeführt. Ein solches Profil ist nicht zwingend notwendig, kann aber die Strömungseigenschaften von Turbinenwelle und Leitapparat 41 verbessern. In der Praxis können somit vier Profile ermittelt werden, nämlich Leitschaufel Fuß und Kopf sowie Laufschaufel Fuß und Kopf.

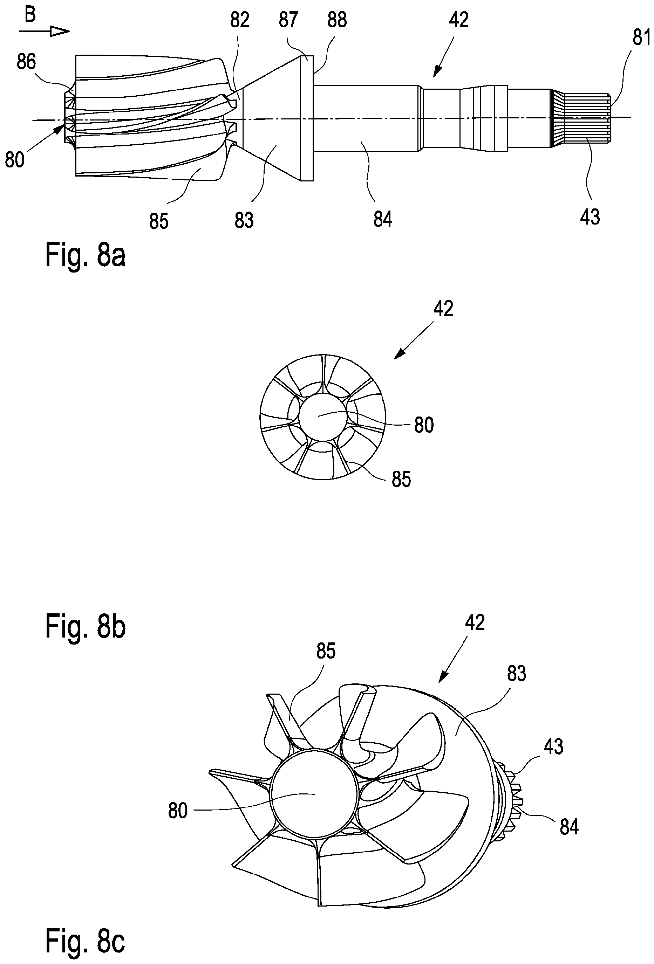

Das Laufrad 42 weist eine Turbinenwelle auf, die sich in die Abschnitte Schaufelwelle 82, Leitkegel 83 und Turbinen-Abtriebswelle 84 in axialer Abfolge aufteilen kann (Figuren 8A-8C). Die Schaufelwelle 82 trägt mehrere Laufschaufeln 85, welche die hydraulische Energie in rotatorische Energie umsetzen. In einem Ausführungsbeispiel können sieben Laufschaufein 85 vorgesehen sein. Die Laufschaufeln 85 können durch einen Wellenstumpf 86 von einer Stirnfläche (stromaufwärtiges Ende) 80 freigestellt sein. Die Wandstärke der Tragflächenprofile der Laufschaufeln 85 kann mit zunehmendem Durchmesser abnehmen, weil auch die Belastung durchmesserabhängig ist.

Der Leitkegel 83 kann stromabwärts zunächst einen Zylinderteil 87 als Übergang und in weiterer Folge eine Wellenschulter 88 aufweisen, die als Anschlagfläche der Gleitringdichtung 65 dient. Der darauffolgende Lagersitz kann ein Loslager 64 tragen, welches hier als Nadelbuchse ausgeführt sein kann (Figur 6A). Als Festlager kann daraufhin ein normales Rillenkugellager 53 vorgesehen sein (Figur 5B). Die Turbinen-Abtriebswelle 84 kann endseitig als Ritzelwelle ausgeführt sein, um die Gesamtkonstruktion schlank zu halten. Das darauf befindliche Ritzel (Wellenverzahnung) 43 kann in der Getriebeeinheit 5, die als Planetengetriebe ausgebildet sein kann, das Sonnenrad der ersten Planetenstufe darstellen. Die Wellenverzahnung 43 kann aber auch mit einer Getriebe-Antriebswelle koppeln, welche das Sonnenrad trägt. Ein nicht näher dargestellter Planetenträger mit mehreren Planetenrädern kann in einer Getriebe-Abtriebswelle 45 enden.

Der Leitkegel 83 kann vorgesehen sein, um die Strömung bei geschlossenem Schieber 8 über die Fluidkammer 30 zu den Düsen 18 zu leiten (Strömungsweg 102 in Figur 10B). Ferner kann die Strömung bei geöffnetem Schieber 8 von der Fluidkammer 30 aus zu den Abströmöffnungen 20 abströmen (Strömungsweg 101 in Figur 10A).

Die Düsenanordnung 12 ist Träger wesentliche Funktionen des Bohrlöschgeräts 1. Die Düsenanordnung 12 weist eine Vielzahl von Düsen 18 auf. In einem Ausführungsbeispiel können sechsundzwanzig Düsen 18 vorgesehen sein. Die Düsen 18 sind in dem Düsengehäuse 4 jeweils durch eine schräge Bohrung 60 ausgebildet, die außen eine zylindrische Senkung 61 aufweisen können und im Inneren des Düsengehäuses 4 mit einer Fluidkammer 30 kommunizieren können, der stromabwärts der Laufräder 85 der Turbine 40 zwischen dem Leitkegel 83 und der Wandung des Düsengehäuses 4 ausgebildet ist. Die Düsen 18 können zueinander versetzt sein, also beispielsweise in zwei Düsenkränzen 31, 32 angeordnet sein, um eine größere Überdeckung zu erreichen. Zusätzlich können an die Düsen 18 Nuten 19 als Ausläufe eingefräst sein. Diese können zur Erhöhung der Kühlfläche und zum Ausspülen beim Eintritt in das Bohrloch dienen. Hinter den Düsen 18 befinden sich mehrere (hier beispielhaft: drei) Abströmöffnungen 20, die als vergleichsweise (im Vergleich mit den Bohrungen 60) großflächige Durchbrüche in der Wandung des Düsengehäuses 4 ausgebildet sind und die durch den Schieber 8 verdeckt (Figur 1 u.a.) oder freigegeben (Figur 2 u.a.) sein können.

Durch die somit ermöglichte, adaptive Querschnitterweiterung kann der Volumenstrom und damit die Turbinenleistung gesteuert werden. Im Bohrbetrieb ist der Schieber 8 in einer ersten Stellung zurückgezogen, dadurch kann der Druck an der Turbine 40 abgebaut und der Großteil des Volumenstroms über einen ersten Strömungsweg 101 über die Abströmöffnungen 20 abgeführt werden(Figur 10A). Im Löschbetrieb ist der Schieber 8 in einer zweiten Stellung über die Abströmöffnungen 20 geschoben und sperrt diese. Dadurch läuft die Turbine 40 im Leerlauf und der Druck wird an den Düsen 18 über einen zweiten Strömungsweg 102 abgebaut (Figur 10B). Der Volumenstrom wird dabei voll und ganz über die Düsenanordnung 12 abgeleitet. Zum Steuern der Querschnitterweiterung wird also der Schieber 8 am Düsengehäuse 4 in Längsrichtung verschoben. Die Lagerung des Schiebers 8 erfolgt durch einen Teflon-Ring 51 und die Abdichtung über einen O-Ring 63 sowie eine konische Dichtfläche am Ende des Schiebers 8. Im Normalzustand wird der Schieber durch eine Spiralfeder 9 gegen das Adapterstück 2 vorgespannt. Um auf den Bohrbetrieb umzuschalten wird durch die zwei Bowdenzüge 10 der Schieber 8 zurückgezogen. Damit öffnen sich die Abströmöffnungen 20 und das Wasser kann kontrolliert zur Seite abströmen.

Um eine ideale Leistungsverteilung, zu erreichen, können zusätzlich zu den Düsen 18 Abströmöffnungen 20 geöffnet werden. Durch das Erweitern des Querschnittes wird ein erhöhter Massenstrom erzeugt, dies führt zu einer höheren Turbinenleistung. Durch den begrenzten Bauraum muss die Leistung an der Turbine über eine hohe Drehzahl abgeführt werden. In weiterer Folge kann ein Planetengetriebe 5 eingesetzt werden, welches die Drehzahl unter Erhöhung des Drehmomentes auf eine ideale Bohrdrehzahl senkt. Um die Drehzahl zu senken und das notwendige Drehmoment zu erreichen, wird nach der Turbine 40 ein Planetengetriebe 5 dazwischengeschaltet. Mit einer Übersetzung von beispielsweise 1:10 bis 1:16 kann dies über mehrere Planetenstufen erfolgen. Abtriebsseitig kann die Welle 45 an einem Zwischenstück 6 gelagert sein und ansonsten direkt an die Werkzeugaufnahme 7 anknüpfen.

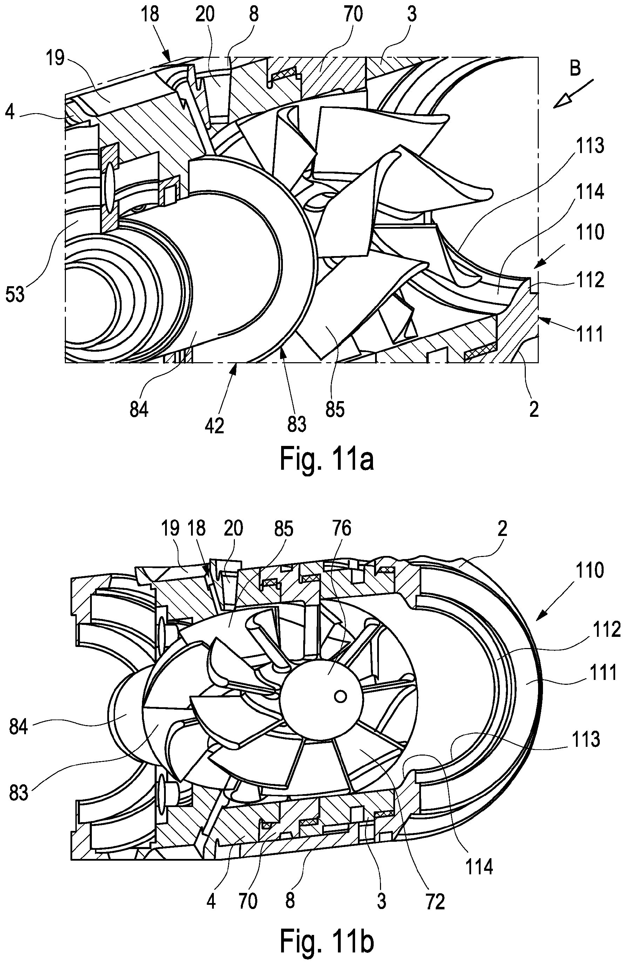

Das Adapterstück 2 dient der Verbindung mit einer Halterung und kann zu diesem Zweck eine Kupplungseinrichtung 110 aufweisen. Hierzu können zunächst eine Stirnfläche 111 und eine zurückgesetzte Absatzfläche 112 als Anschlag vorgesehen sein. Letztere Absatzfläche 112 kann eine nach radial innen weisende Ringfläche 113 sowie auf der stromabwärtigen Seite eine schräge Rampenfläche 114 aufweisen, hinter welche eine Klemme, Klaue oder dergleichen der Halterung greifen kann (Figuren 11A, 11B).

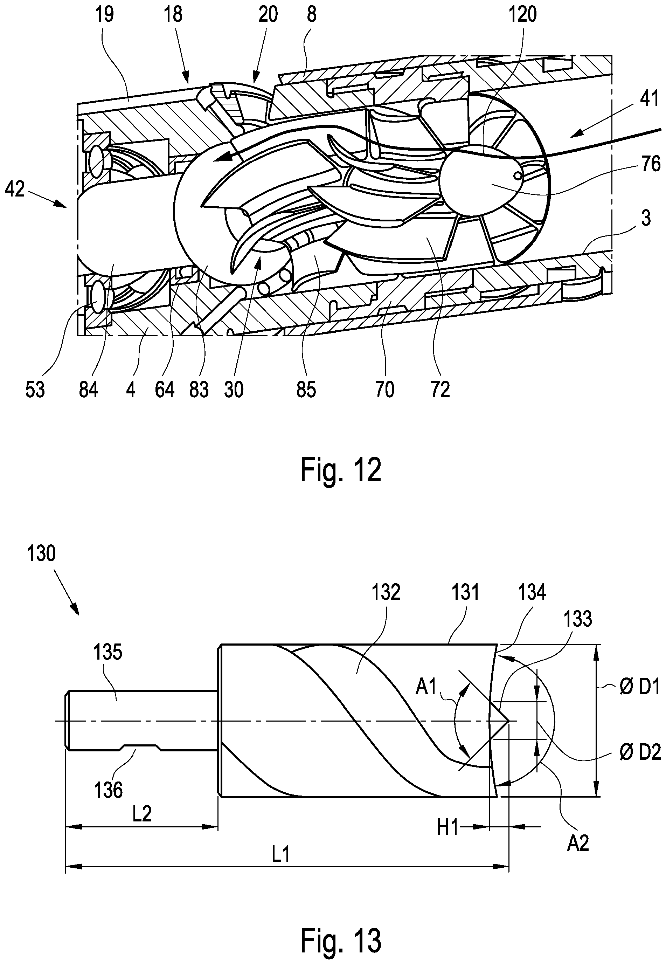

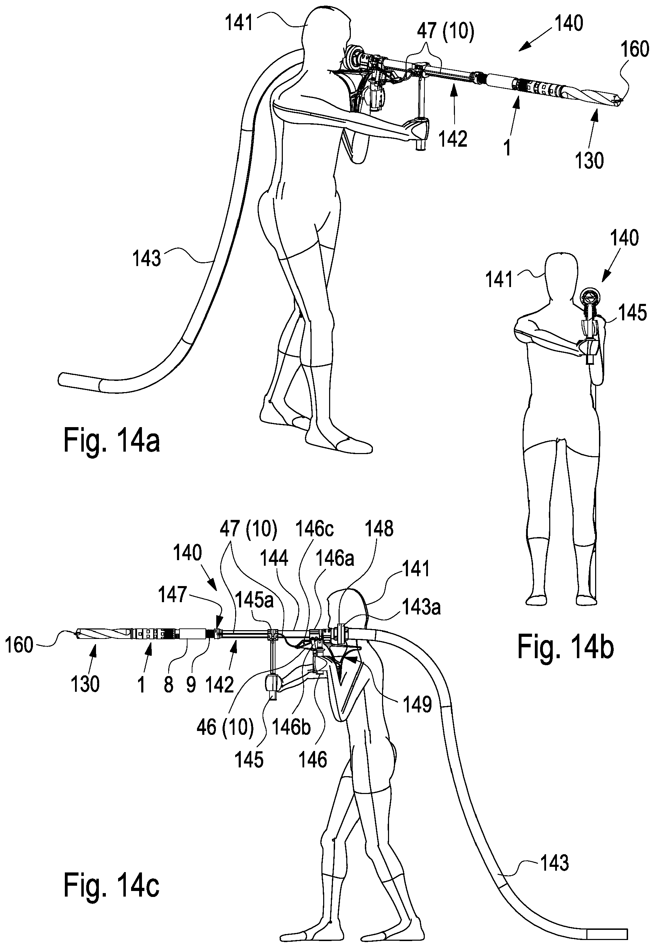

Die Werkzeugaufnahme 7 dient als Schnittstelle zwischen Werkzeug (Bohrer 130, Figuren 13, 14A-14C) und Antriebsstrang. Als Verbindung zum Werkzeug kann beispielsweise eine standardisierte Weldon-Aufnahme zum Einsatz kommen. Das Nadellager 58 stützt die Werkzeugaufnahme 7 mit ihrer verhältnismäßig großen Kraglänge (Figur 5B). Als Festlager dient das Lager 56 am Getriebeabtrieb 45. Die Werkzeugaufnahme 7 kann durch eine Verschraubung 57 mit der Getriebe-Abtriebswelle 45 verbunden sein, sie kann sich an einem Konus 45a abstützen und zusätzlich am Ende mit einem Zylindersitz 45b zentriert werden (Figur 4B). Die Abdichtung nach außen kann durch einen Radialwellendichtring 49 erfolgen.

Das Gehäuse der Getriebeeinheit 5 wird durch ein Zwischenstück 6 erweitert, um das Stützlager 58 und den Radialwellendichtring 59 aufzunehmen (Figuren 4B, 5B). Die Zentrierung kann bei den anderen Bauteilen durch die Verschraubung 55 mit konischem und zylindrischem Sitz erfolgen. Das Zwischenstück 6 ist in diesem Sinne nur eine Erweiterung des Gehäuses.

Das Bohrlöschgerät 1 findet seine Anwendung in den unterschiedlichsten Materialien. Für den Einsatz mit dem erfindungsgemäßen Gerät 1 kann daher ein Universal-Bohrer 130 verwendet werden, der Ziegel, Holz, Blech und andere Baustoffe auf eine Tiefe von bis zu 50 cm durchbohren kann (Figur 13). Der Bohrer 130 kann einstückig ausgebildet sein. Der Bohrer 130 kann einen Schaft 135, der zur Aufnahme in der Aufnahmeöffnung 13 der Werkzeugaufnahme 7 ausgebildet ist, und einen Kopf 131 aufweisen. Der Kopf 131 kann mit einer doppelten Wendelnut 132, einer Zentrierspitze 133 und einer Stirnfläche 134 ausgebildet sein. Der Schaft 135 kann eine Mitnahmefläche 136 zur Fixierung in der Aufnahmeöffnung 13 mittels des Gewindestifts 21 aufweisen. Die Mitnahmefläche 136 kann beispielsweise gemäß DIN 6535 HB für eine Weldon-Aufnahme ausgebildet sein.

Der Bohrer 130 weist eine Gesamtlänge L1, der Schaft 135 eine Schaftlänge L2, der Kopf 131 einen Kopfdurchmesser D1, die Zentrierspitze 133 eine Spitzenhöhe H1, einen Spitzenwinkel A1 und einen Spitzengrunddurchmesser D2 an ihrer Basis und die Stirnfläche 134 einen Kegelwinkel A2 auf. Für die Multiversatilität wurde ein Spezialschliff entwickelt, der sowohl im weichen Holz als auch im harten Stahlblech exzellente Schneideigenschaften aufweist. Grundlage für den Bohrer kann ein HSS-Stahlbohrer mit Spezialschliff sein. Dabei haben sich ein Spitzenwinkel A1 von etwa 60-90° und ein Kegelwinkel A2 von etwa -160° bis - 170°als praktikabel herausgestellt. Der Spitzengrunddurchmesser D2 ist durch die Tiefe der Wendelung 132 begrenzt und kann beispielsweise 10-15 mm betragen. Die Spitzenhöhe H1 kann sich dann als Folgemaß ergeben und kann beispielsweise 5-10 mm betragen. Der angetriebene Bohrer 130 besitzt Übermaß gegenüber dem Gehäuse des Bohrlöschgeräts 1. Wenn das Gehäuse beispielsweise etwa einen Außendurchmesser von 50 mm aufweist, kann der Bohrer 130 beispielsweise einen Kopfdurchmesser D1 von etwa 52 mm aufweisen. Der Schaft 135 kann anhand der Gegebenheiten der Werkzeugaufnahme dimensioniert sein und beispielsweise eine Länge L2 von etwa 50-55 mm aufweisen. Die Gesamtlänge L1 des Bohrers 130 kann im Hinblick auf ein zu erwartendes Hindernis ausgewählt werden. Für Zwischenwände kann beispielsweise die Gesamtlänge L1 etwa 150 mm betragen, für Dachkonstruktionen können Längen von bis zu 500 mm oder mehr sinnvoll sein.

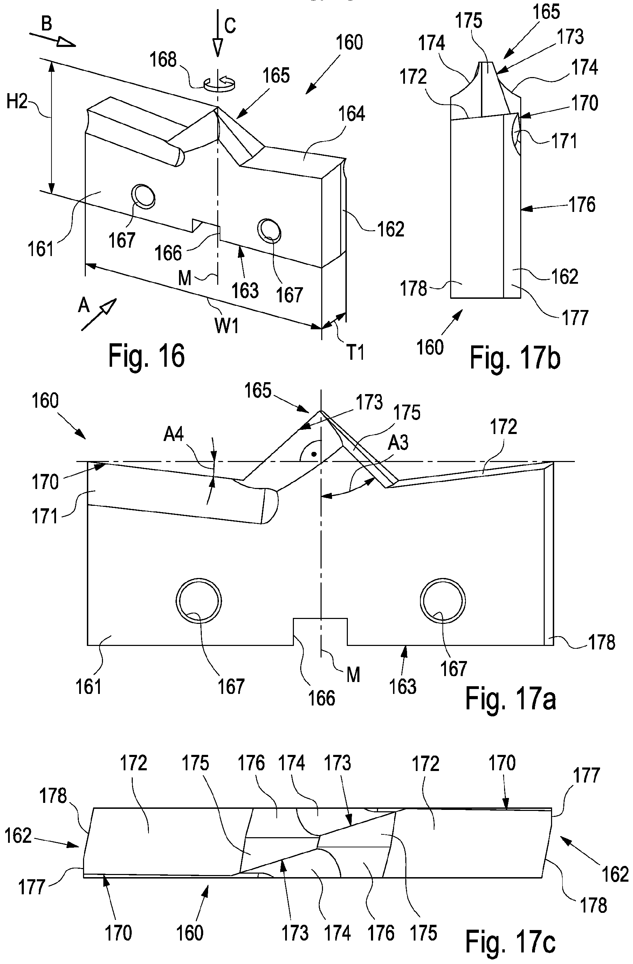

In einer Ausführungsvariante kann das Werkzeug einen Träger mit einer Schneidplatte 160 aufweisen (Figuren 14A-14C, 16, 17A-17C). Der Träger kann beispielsweise aus Werkzeugstahl ausgebildet sein und kann wie ein einstückiger Bohrer eine Wendelung aufweisen (vgl. Figuren 14A, 14C). Die Schneidplatte 160 kann beispielsweise aus HSS hergestellt sein. Die Schneidplatte 160 kann von grundsätzlich flach quaderförmiger Gestalt sein mit zwei Planflächen 161, zwei Seitenflächen 162, einer Standfläche 163 und einer Stirnfläche 164, von welcher eine Zentrierspitze 165 aufragt (Figur 16). In der Standfläche 163, die in einer Nut des Trägers zu stehen kommt, kann eine Zentriernut 166 ausgebildet sein. Zwischen den Planseiten 161 können eine oder mehrere Befestigungsbohrungen 167 ausgebildet sein, die glatt oder mit einem Innengewinde versehen sein können. In letzterem Fall können die Befestigungsbohrungen 167 als Sack- oder Durchgangsbohrungen ausgebildet sein, glatte Befestigungsbohrungen 167 sind durchgehend, gegebenenfalls als Passbohrungen, ausgebildet.

In der Stirnfläche 164 der Schneidplatte 160 sind zu beiden Seiten der Zentrierspitze 165 zur Drehrichtung 168 hin jeweilige Schneidkanten 170 ausgebildet, wobei unterhalb der Schneidkanten 170 in den Planflächen 161 jeweilige Spannuten 171 ausgebildet sein können Figuren 17A-17C). Hinter den Schneidkanten 170 kann die Stirnfläche 164 jeweils einen Hinterschliff 172 aufweisen. Auch die Zentrierspitze 165 kann Schneidkanten 175 mit sich jeweils unterhalb anschließenden Spannuten 172 und diesen in Bezug auf die Drehrichtung 168 nachlaufend eine Stützfläche 175 und einen Hinterschliff 176 aufweisen. Die Seitenflächen 162 weisen zur Drehrichtung 168 hin jeweilige Schneid- oder Räumkanten 176 auf, denen in Bezug auf die Drehrichtung 168 jeweils eine Stützfläche 177 und ein Hinterschliff 178 folgen.

Die Schneidplatte 160 weist eine Gesamthöhe H2 und eine Gesamtbreite W1, die Zentrierspitze 165 einen halben Spitzenwinkel A3 und die Stirnfläche 164 bzw. die Schneidkante 170 einen Anschliffwinkel A4 gegenüber einer zur Mittelachse M der Schneidplatte 160 senkrechten Ebene auf. Für die Auslegung der Schneidengeometrie können ergänzend auch Angaben zu dem Bohrer 130 herangezogen werden. Ein Anschliffwinkel von etwa 7° hat sich als besonders vorteilhaft herausgestellt. Wiederum auf einen Gerätedurchmesser von 50 mm bezogen ist eine Breite W1 von etwa 52 mm praktikabel, sodass sich ein Übermaß von 2 mm ergibt. Dadurch kann das Bohrlöschgerät auch bequem durch das durch den Bohrer 130 geschaffene Loch hindurchgeführt werden, ohne zu verklemmen. Gegebenenfalls kann das Übermaß auch kleiner, beispielsweise etwa 1 mm, oder größer, beispielsweise etwa 4 mm, sein. Der halbe Spitzenwinkel A3 kann etwa 45° betragen, was dem Spitzenwinkel A1 von etwa 90° entspricht.

Wie auch immer der Bohrer 130 (ob einstückig oder mit Schneidplatte 160) ausgebildet ist, kann die Schneidengeometrie so ausgeführt sein, dass alle möglichen Bauwerkstoffe, insbesondere alle möglichen Dachwerkstoffe zerspant werden können. Insbesondere weist der Bohrer 130 Multiversatilität in Bezug auf unterschiedliche Werkstoffe wie Holz, Metall, Stein, ggf. Beton, Hartfaserplatte, Dämmstoffe auf. Als Zentrierung dient eine Zentrierspitze 133, 165 in der Mitte des Bohrers 130 bzw. der Schneidplatte 160. Für die ideale Zerspanung wurden die Schneidflanken negativ oder in Sonderfällen auch stumpf angestellt.

Die Bedienung des Gerätes erfolgt in Hand- oder Maschinenführung.

Die Turbine ist als Wasserturbine mit Zweckverrichtung äußerst raumsparend und leicht und besitzt eine hohe Leistungsdichte. In einem Ausführungsbeispiel weist die Turbine einen Außendurchmesser von 32 mm auf und kann damit ca. 3,5 kW mit bis zu 8 Nm und über 4000 U/min an mechanischer Energie abführen. Durch ein Planetengetriebe wird die Leistung auf bis zu 80 Nm und 400 U/min an den Bohrer 130 abgegeben. Nach der Turbine 43 wird das Wasser durch die Düsen 18 geleitet und in zerstäubter Form abgeführt. Somit sind das Löschen und Bohren in einem Gerät integriert.

Das Gerät 1 kann mit einer Hochdruckturbine bis 40 bar oder mit einer Niederdruckturbine bis 16 bar ausgelegt sein. Das Marktpotenzial für Hochdruckturbinen geht jedoch zurück. Während Hochdruck nur in vereinzelten Bundesländern Österreichs sowie von einigen wenigen Feuerwehren in Mitteleuropa verwendet wird, ist der Niederdruck bis 16 bar weltweiter Standard. Die Turbine 43 ist also vorzugsweise als Niederdruckturbine ausgelegt.

Grundsätzlich spielt es für die Turbine keine große Rolle, welcher Eingangsdruck vorliegt. Bei gleichbleibendem Druckunterschied wird jedoch ein ausreichend großer Volumenstrom benötigt. Die Düsen 18 begrenzen mit dem enormen Widerstand jedoch den Durchfluss. Die Lösung für diese Problematik liegt in den schiebergesteuerten Abströmöffnungen 20 hinter der Turbine. Aufgrund der Querschnittserweiterung kann während des Bohrens der notwendige Durchfluss erreicht werden und zum Löschen die gesamte Leistung auf die Düsen 18 gestellt werden.

In Figuren 10A und 10B ist der Schieber 8 in geschlossener und offener Stellung dargestellt. Der Schieber 8 steuert die Abströmöffnungen 20, während die Düsen 18 immer geöffnet bleiben. Die Lagerung erfolgt nur mit Wälzlagern, die Turbine selbst wird mit der Gleitringdichtung 65 abgedichtet. Die Übersetzung am Planetengetriebe 5 ist an den Anwendungsfall angepasst.

Der Hauptanwendungszweck der Erfindung ist derzeit die Löschtechnik. Zum Bohrlöschgerät 1 selbst kommen in einem Bohrlöschsystem 140 noch Halterungen hinzu, das Bohrlöschgerät 1 selbst ist jedoch stets gleich ausgeführt. Eine Halterung kann die Turbine auf einem Hubrettungsgerät wie einer Drehleiter oder einer Teleskopmastbühne führen. Dazu können Anschlagpunkte auf den verwendeten Geräten verwendet oder vorgesehen werden. Eine andere Version dient zu Handführung der Turbine, bei der ein Feuerwehrmann oder allgemeiner eine Person 141 das Gerät wie eine Bohrmaschine etwa auf einem Dach in Position bringen kann (Figuren 14A bis 14C). In dem Fall kann die Halterung 142 als Personenadapter ausgebildet sein, um an einen Schlauch 143 angeschlossen und von einer Person 141 getragen, gehalten und gehandhabt zu werden. Die Halterung 142 kann ein Rohrkörper 144 mit einer Gerätekupplung 147, die zur Verbindung mit dem Adapterstück 2 des Bohrlöschgeräts 1 ausgebildet ist, und einem Flansch 148, der zur Verbindung mit einem Gegenflansch 143a des Schlauchs 143 ausgebildet ist, aufweisen. An dem Rohrkörper 144 können ein erster Haltegriff 145, ein zweiter Haltegriff 146 und eine Schulterstütze 149 angeordnet sein. Der erste Haltegriff 145 kann eine Manschette 145a aufweisen, die an dem Rohrkörper 144 befestigt ist und an welcher oder durch welche die Hülle 47 des Zugmittels 10 geführt sein kann. Der zweite Haltegriff 146 kann ebenfalls über eine Manschette 146a an dem Rohrkörper 144 befestigt sein und einen Hebel 146b tragen, der zur Betätigung des Zugmittels 10 ausgebildet sein kann. Hierzu kann die Hülle 47 des Zugmittels 10 an einem Bügel 146c gestützt sein und das Seil 46 des Zugmittels 10 ab dem Hebel 146b befestigt sein. Somit kann durch Ziehen des Hebels 146b der Schieber 8 über das Seil 46 zurückgezogen werden, während bei Loslassen des Hebels 146b der Schieber 8 durch die Wirkung der Feder 9 nach vorn geschoben wird. Der Hebel 146b kann somit als Auslösevorrichtung für die Verschluss- bzw. Umschalteinrichtung 22 dienen. Die Schulterstütze 149 kann in der Form eines Bügels an eine Schulterform der Person 141 angepasst sein und kann eine universelle Form unter Berücksichtigung einer Schutzkleidung aufweisen.

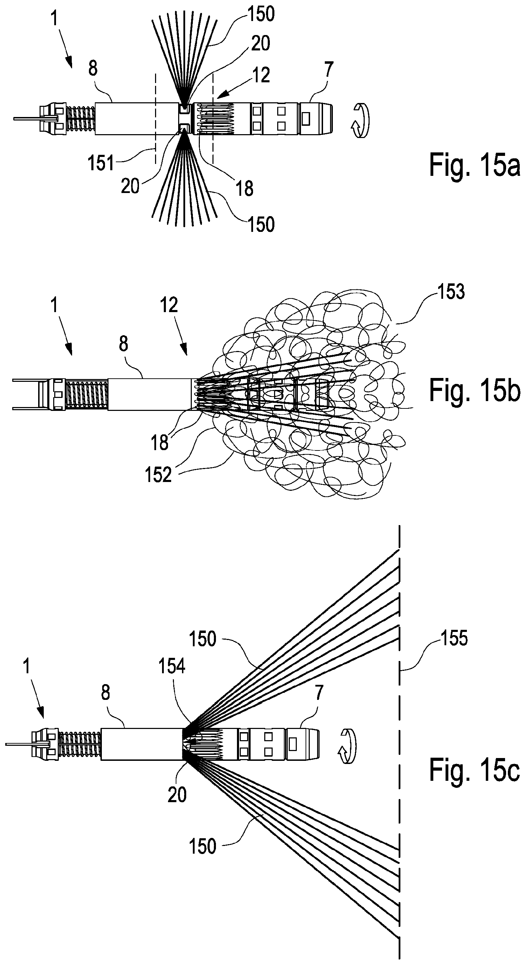

Vorstehend wurde eine erste Stellung, in welcher der Schieber 8 die Abströmöffnungen 20 vollständig freigibt, beschrieben. In dieser Stellung, welche einer Antriebsbetriebsart entspricht, tritt das Fluid in nahezu vollständig radial gerichteten Strahlen 150 aus den Abströmöffnungen 20 aus (Figur 15A). Die Werkzeugaufnahme 7 dreht sich durch die Turbine angetrieben. Die Düsen 18 lassen kaum Fluid durch. Die Fluidstrahlen 150 bilden eine Fluidbarriere 151 in Form eines Kranzes oder, je nach seitlicher Auffächerung der Strahlen 150, eines Tellers, welche auch vor gegebenenfalls vom Hindernis aus zurückschlagenden Flammen, Rauch und Gasen wirksam schützt. Ferner wurde eine zweite Stellung, in welcher der

Schieber 8 die Abströmöffnungen 20 vollständig verdeckt, beschrieben. In dieser Stellung, welche einer Löschbetriebsart entspricht, tritt das Fluid in mehreren Kränzen von vernebelten Düsenstrahlen 152 aus den Düsen 18 aus, um eine Nebelwolke 153 auszubilden (Figur 15B). Diese Nebelwolke 152 weist einen hohen Zerstäubungsgrad und damit eine große Oberfläche auf, was bekanntlich aufgrund rascher Verdampfung zu einer hohen Löschwirkung durch Abkühlung führt. Ferner kann es im Einsatz von Vorteil sein, wenn der Schieber 8 die Abströmöffnungen 20 nur teilweise überdeckt (Figur 15C). In einer solchen Zwischenstellung lenkt eine Kante 154 des Schiebers 8 die Strahlen 150 nach vorn ab, sodass diese einen Fluidkegel 155 mit hohem Volumenstrom ausbilden. Diese Stellung kann im Einsatz von besonderem Vorteil sein, wenn vom Hindernis aus plötzlich ein Flammenrückschlag erfolgt. Durch den sich ausbildenden Kegel 155 kann ein solcher Flammenrückschlag rasch und wirksam zurückgedrängt werden.

Obschon die Erfindung anhand eines derzeit bevorzugten Ausführungsbeispiels ausführlich und vollständig beschrieben und zeichnerisch dargestellt wurde, ist die Erfindung weder auf die beschriebenen Einzelheiten des Ausführungsbeispiels beschränkt noch darauf festgelegt, sondern allein durch die unabhängigen Ansprüche in ihrer jeweils geltenden Fassung definiert. Der Fachmann wird leicht erkennen, dass vielfältige Abwandlungen, Ergänzungen und Weglassungen an dem beschriebenen Ausführungsbeispiel im Rahmen des durch die unabhängigen Ansprüche definierten Gegenstands denkbar sind. Jedes einzelne Merkmal, das im Rahmen diese Anmeldung beschrieben und/oder gezeigt ist, kann einzeln und ungeachtet eines konstruktiven Zusammenhangs mit anderen Merkmalen einem beanspruchten Gegenstand hinzugefügt werden, um einen neuen Erfindungsgegenstand zu bilden, sofern es einzeln oder gemeinsam mit anderen Merkmalen des beanspruchten Gegenstands der Lösung einer technischen Aufgabe dient. Jedes einzelne Merkmal eines beanspruchten Gegenstands kann weggelassen, um einen neuen Erfindungsgegenstand zu bilden, sofern der neue Erfindungsgegenstand auch ohne das weggelassene Merkmal eine technische Aufgabe löst.

Beispielsweise können die Düsen 18, die in zwei Reihen 31, 32 beschrieben und dargestellt wurden, auch in anderer Anordnung ausgebildet sein, insbesondere in einer einzige Reihe oder in mehr als zwei Reihen, es können die Reihen um einen anderen Versatz als einen halben Abstand der Düsen 18 in einer Reihe versetzt sein, oder es können die Düsen 18 verschiedener Reihen oder innerhalb einer einzigen Reihe mit unterschiedlichen Bohrungswinkeln der Bohrungen 60 ausgebildet sein.

Es ist auch zu verstehen, dass die Düsen 18 und die Abströmöffnungen 20 nicht in der Wandung des gleichen Bauteils (hier des Düsengehäuses 4) ausgebildet werden müssen. Die Anordnung und Ausbildung der die grundsätzlich rohrförmige Wandung des Bohrlöschgeräts 1 ausbildenden Bauteile kann an spezielle Bedürfnisse angepasst werden. Beispielsweise kann zwischen dem Leitapparat 41 und dem Düsengehäuse 4 ein zusätzliches Turbinengehäuse angeordnet sein, welches die Abströmöffnungen 20 aufweist. So können beispielsweise unterschiedliche Laufradgeometrien unabhängig von dem Düsengehäuse 4 realisiert werden.

In Abwandlungen kann auf die Düsen 18 verzichtet werden. In weiteren Abwandlungen kann auf die Abströmöffnungen 20 verzichtet werden. Anstelle einer Vielzahl von Düsen 18 und Abströmöffnungen 20 kann jeweils nur eine Düse 18 oder eine Abströmöffnung 20 vorgesehen sein.

Der Schieber 8 kann in einer Ausführungsalternative so ausgebildet sein, dass er in der Bohrstellung die Düsen ganz oder teilweise verschließt. Hierzu können beispielsweise an dem Hebel 146b Rasten vorgesehen sein, die unterschiedlichen Öffnungs- bzw. Schließgraden der Abströmöffnungen 20 entsprechen. Anstelle des dargestellten Schiebers 8 könnte in einer weiteren Ausführungsalternative beispielsweise auch eine Drehmanschette mit Fenstern, welche den Abströmöffnungen 20 im Querschnitt entsprechen, vorgesehen sein, die über eine Mimik in einer Drehbewegung geführt werden kann, um wahlweise die Fenster oder Stege zwischen den Fenstern mit den Abströmöffnungen 20 in Deckung zu bringen.

Das Bohrlöschgerät 1 ist insbesondere für eine Anwendung bei Niederdruck geeignet. Im Rettungswesen, insbesondere Feuerwehr und Technischen Hilfsdiensten, ist Niederdruck vielfach bis maximal 16 bar Nenndruck und Hochdruck bis maximal 40 bar Nenndruck definiert, und Geräte, Fittings, Dichtungen, Leitungen, und Anschlüsse sind dem entsprechend ausgelegt. Dabei bedeutet ein Nenndruck von PN16, dass ein maximaler Betriebsdruck von 16 bar nicht überschritten werden darf, wobei der Prüfdruck 25 bar beträgt und der Mindestberstdruck 60 bar. In der Praxis arbeitet man aber auch bei ND16 mit nicht mehr als 10 bis 12 bar. Die Turbine selbst baut einen Differenzdruck von ca. 2-8 bar ab. Die hydraulische Leistung setzt sich aus dem Produkt von Volumenstrom und Differenzdruck ab.

Gemäß der Bernoulli-Gleichung in Druckform kann das Gleichgewicht bei Annahme der gleichen geodätischen Höhe dann wie folgt beschrieben werden:

$$p(\text{Pumpe}) + \rho * C(\text{Eintritt})^2 / 2 + p(\text{Atmosphäre}) =$$
$$= \Delta p(\text{Turbine}) + \rho * C(\text{Austritt})^2 / 2 + p(\text{Atmosphäre}) + \Sigma \Delta pv$$

mit

p = Druck
C = Strömungsgeschwindigkeit
$\rho$ = Dichte des Fluids
$\Sigma \Delta pv$ = Summe aller Druckverluste (außer Turbine)

Der atmosphärische Druck am Eintritt und Austritt ist gleich, daher fällt dieser Term weg. Die Strömungsgeschwindigkeit am Eintritt kann vernachlässigt werden, weil die Pumpe aus einem großen Tank ansaugt, die Eintrittsgeschwindigkeit ist daher annähernd Null. Die Austrittsgeschwindigkeit ist noch ein wesentlicher Anteil, weil bei den Düsen hohe Geschwindigkeiten auftreten. Übrig bleibt dann:

$$p(\text{Pumpe}) = \Delta p(\text{Turbine}) + \rho * C(\text{Austritt})^2 / 2 + \Sigma \Delta p$$

Wird der Querschnitt der Düsen kleiner, so wird zum einen die Reibung größer als auch die Austrittsgeschwindigkeit größer, und damit wird mehr Energie zum Vernebeln umgewandelt.

Der Abtriebsdruck wirkt sich auf die Pumpenkennlinie des Antriebsaggregates aus und bestimmt somit den Durchfluss. Wenn also die Druckverluste zu hoch sind, um bei einem bestimmten Betriebsdruck einen bestimmten Volumenstrom zu erzeugen, dann hat die Turbine zu wenig Leistung. Beispielsweise können bis zu 40 bar benötigt werden, um den notwendigen Durchfluss durch die Düsen zu erzeugen, wenn durch die Druckverluste an der Düse und im Schlauch entsprechend viel Reibung entsteht.

Werden die Abströmöffnungen 20 und der Schieber 8 eingesetzt, kann der Querschnitt vergrößert und können sowohl die Geschwindigkeit als auch die Reibung massiv reduziert werden. Dadurch kann auch bei niedrigen Drücken von beispielsweise maximal 16 bar sichergestellt werden, dass der notwendige Durchfluss erzeugt wird. Der Vorteil einer Umschalteinrichtung ergibt sich somit aus der Düsengeometrie und dem Gleichgewicht zwischen daraus resultierendem Druckverlust und Durchfluss rückwirkend auf die Pumpenkennlinie des Antriebsaggregats.

Die Turbine 40 des Ausführungsbeispiels kann einen Leitapparat 41 und ein Laufrad 42 aufweisen. In Abwandlungen können auch mehrere Stufen von Leitapparaten und Laufrädern vorgesehen sein, oder es kann ein Leitapparat 41 entfallen.

Im Ausführungsbeispiel ist die Fluidkammer 30 durch den Leitkegel 83 und die Wandung des Düsengehäuses 4 gebildet. Durch diese Anordnung kann der Strömungsweg leicht zwischen den Abströmöffnungen 20 und den Düsen 18 umgeschaltet und geleitet werden. Es sind aber auch andere konstruktive Lösungen denkbar. Beispielsweise könnte der Leitkegel 83 eine gekrümmte, insbesondere konkave Kontur aufweisen.

Das Zugmittel 10 ist eine spezielle Ausführungsform eines Kraftübertragungsmittels. Dieses kann auch beispielsweise in Form eines Gestänges ausgebildet sein, und die Auslösung einer Bewegung an der Halterung 142 kann über ein Hebelwerk anstelle eines Bowdenzugs auf den Schieber 8 übertragen werden. Wenn das Kraftübertragungsmittel druckbelastbar ist, kann anstelle der Feder 9 an dem Bohrlöschgerät 1 auch ein Rückstellmechanismus an der Halterung 142 vorgesehen sein.

In einer Ausführungsvariante kann der Schieber 8, zusätzlich zu der ersten Stellung, in welcher die Abströmöffnungen 20 geöffnet sind, um eine Bohrfunktion des Bohrlöschgeräts zu verwirklichen (Figur 15A), und der zweiten Stellung, in welcher die Abströmöffnungen 20 verschlossen sind, um eine Lösch- oder Sprühfunktion des Bohrlöschgeräts 1 zu verwirklichen (Figur 15B), noch eine dritte Stellung vorgesehen sein in welcher die Düsen 18 verschlossen sind, um den Fluidfluss ganz zu blockieren. Durch Zwischenstellungen kann erreicht werden, dass mehrere Ringe von Düsen 18 sukzessive verschlossen oder freigegeben werden.

Alternativ oder zuschaltbar zu der Bohrfunktion kann ein Schlagwerk vorgesehen werden, welches in den Kraftweg der Turbine eingekoppelt ist oder werden kann.

In einer Ausführungsvariante kann ein Absperrorgan an der Halterung 142 oder an dem Bohrlöschgerät 1 selbst vorgesehen sein, um einen Zustrom des Fluids von dem Schlauch 143 aus abzusperren.

Über Zusatzwege oder Zusatzaggregate kann ein Zustrom oder eine Beimischung anderer Fluide zusätzlich oder/und alternativ zu dem über den Schlauch 143 zugeführten Fluid ermöglicht werden.

Die Anwendung der Turbinenkonstruktion ist nicht auf den Löscheinsatz beschränkt. Wenn man die Düsenkonstruktion entfernt und den Strahl frei führt, kann die Turbine auch für die Kleinwasserkraft eingesetzt werden. Bei einer Rückführung der durch die Abströmöffnungen 20 austretenden Fluidmenge in einem Mantelrohr könnte damit ein leistungsstarkes Bohrwerk betrieben werden, welches zudem gleichzeitig gekühlt als auch gespült werden kann. Beispielsweise könnte dieselbe Technik zur Anwendung im Bergbau oder überall dort, wo mit Schlagwetter gerechnet werden muss, angepasst werden. Das Bohrlöschgerät kann somit auch als ein hydraulisches Bohrgerät mit Löschfunktion oder als Löschsystem mit Bohrfunktion verstanden werden, und das Bohrlöschsystem kann auch als Bohrsystem mit Löschfunktion oder als Löschgerät mit Bohrfunktion verstanden werden, wobei jeweils ein Antriebsfluid als Löschmittel oder ein Löschfluid als Antriebsmittel verwendet werden kann. Der Bohrer und die Schneidplatte sind, insbesondere in Bezug auf die Schneidengeometrie, eigenständige Entwicklungen und können auch unabhängig vom oben beschriebenen Bohrlöschgerät oder Bohrlöschsystem zur Durchdringung von Multiwerkstoffen verwendet werden.

Liste der Bezugzeichen und Symbole

| | |
|---|---|
| 1 | Bohrlöschgerät |
| 2 | Adapterstück |
| 3 | Distanzrohr |
| 4 | Düsengehäuse |
| 5 | Getriebeeinheit |
| 6 | Zwischenstück |
| 7 | Bohrfutter |
| 8 | Schieber |
| 9 | Rückstellmechanismus (Feder) |
| 10 | Zugmittel |

| 11 | Einströmöffnung |
|---|---|
| 12 | Düsenanordnung |
| 13 | Werkzeugaufnahme |
| 14-17 | Schlüsselfläche |
| 18 | Düse (Nebeldüse) |
| 19 | Nut |
| 20 | Abströmöffnung |
| 21 | Gewindestift |
| 22 | Umschalteinrichtung (Verschlusseinrichtung) |
| 30 | Fluidkammer |
| 31 | Erste Düsenreihe (Düsenkranz) |
| 32 | Zweite Düsenreihe (Düsenkranz) |
| 40 | Turbine |
| 41 | Leitapparat |
| 42 | Laufrad |
| 43 | Wellenverzahnung (Ritzel, Sonnenrad) |
| 45 | Getriebe-Abtriebswelle |
| 46 | Seil |
| 47 | Hülle |
| 48 | Endkappe |
| 50 | Verschraubung |
| 51 | Dichtring (Teflonring) |
| 52 | Verschraubung |
| 53 | Festlager (Rillenkugellager) |
| 53a | Vorspannscheibe |
| 54 | Verschraubung |
| 55 | Verschraubung |
| 56 | Rillenkugellager |
| 57 | Verschraubung |
| 58 | Stützlager (Nadellager) |
| 59 | Radialwellendichtung |
| 60 | Bohrung |
| 61 | Senkung |
| 62 | Verschraubung |
| 63 | Dichtring (O-Ring, Teflonring) |
| 64 | Loslager (Nadellager) |
| 65 | Gleitringdichtung |
| 70 | Käfig |
| 71 | Strömungsteiler |
| 72 | Leitschaufel |
| 73 | Außengewinde (zu Verschraubung 52) |
| 74 | Schlüsselfläche |
| 75 | Aufnahmeraum |
| 76 | Anströmende |
| 77 | Staupunkt |
| 78 | Hohlraum |
| 79 | Innengewinde (zu Verschraubung 62) |
| 80 | Stirnfläche |
| 81 | Endfläche |
| 82 | Schaufelwelle |
| 83 | Leitkegel |
| 84 | Abtriebswelle |
| 85 | Laufschaufel |
| 86 | Wellenstumpf |
| 87 | Zylinderteil |
| 88 | Wellenschulter |
| 90 | Wellenstumpf |
| 101 | Erster Strömungsweg |

| 102 | Zweiter Strömungsweg |
| 110 | Kupplungseinrichtung (Fluidanschluss) |
| 111 | Stirnfläche |
| 112 | Absatzfläche |
| 113 | Ringfläche |
| 114 | Rampenfläche |
| 120 | Strömungsweg |
| 130 | Bohrer |
| 131 | Kopf |
| 132 | Wendelnut |
| 133 | Zentrierspitze |
| 134 | Stirnfläche |
| 135 | Schaft |
| 136 | Mitnahmefläche |
| 140 | Bohrlöschsystem |
| 141 | Person |
| 142 | Halterung (Personenadapter) |
| 143 | Schlauch |
| 143a | Flansch |
| 144 | Rohrkörper |
| 145 | Erster Handgriff |
| 145a | Manschette |
| 146 | Zweiter Haltegriff |
| 146a | Manschette |
| 146b | Hebel |
| 146c | Bügel |
| 147 | Gerätekupplung |
| 148 | Flansch (Schlauchanschluss) |
| 149 | Schulterstütze |
| 150 | Fluidstrahl |
| 151 | Fluidbarriere |
| 152 | Düsenstrahl |
| 153 | Nebelwolke |
| 154 | Kante |
| 155 | Fluidkegel |
| 160 | Schneidplatte |
| 161 | Planfläche |
| 162 | Seitenfläche |
| 163 | Standfläche |
| 164 | Stirnfläche |
| 165 | Zentrierspitze |
| 166 | Zentriernut |
| 167 | Befestigungsbohrung |
| 170 | Schneidkante |
| 171 | Spannut |
| 172 | Hinterschliff |
| 173 | Schneidkante |
| 174 | Spannut |
| 175 | Stützfläche |
| 176 | Hinterschliff |
| 177 | Räumkante |
| 178 | Stützfläche |
| 179 | Hinterschliff |

| A1 | Spitzenwinkel |
| A2 | Kegelwinkel |
| A3 | halber Spitzenwinkel |
| A4 | Anschliffwinkel |

D1  Kopfdurchmesser
D2  Spitzengrunddurchmesser
H1  Spitzenhöhe
H2  Plattenhöhe
L1  Bohrer-Gesamtlänge
L2  Schaftlänge
M   Mittelachse (Rotationsachse)
W1  Plattenbreite

Die vorstehende Liste ist integraler Bestandteil der Beschreibung.


**Patentansprüche**

1.  Bohrlöschgerät (1), aufweisend:

    - eine Werkzeugaufnahme (13), welche zur Aufnahme eines Werkzeugs oder zur Verbindung mit einem Werkzeug ausgebildet ist,
    - einen Fluidanschluss (110), welcher zum Zuführen eines Fluids ausgebildet ist;
    - eine Turbine (40) mit einem Laufrad (42), das wenigstens eine Stufe einer Vielzahl von Laufschaufeln (85) aufweist und mit der Werkzeugaufnahme (13) verbunden oder verbindbar ist, um diese in einer Antriebsbetriebsart unter Verwendung des über den Fluidanschluss (110) zugeführten Fluids als Antriebsfluid drehend und/oder schlagend anzutreiben;
    - wenigstens eine Abströmöffnung (20), welche in einer feststehenden Wandung (4) des Bohrlöschgeräts (1) ausgebildet ist und mit einer stromabwärts der Laufschaufeln (85) der Turbine (40) ausgebildeten, vorzugsweise ringförmigen Fluidkammer (30) kommuniziert, und welche einen ersten Strömungsweg (101) ausbildet, der dimensioniert ist, um das als Antriebsfluid zum Betrieb der Turbine (40) in der Antriebsbetriebsart verwendete Fluid an eine Umgebung des Bohrlöschgeräts (1) abzugeben und/oder eine Düsenanordnung (12) mit einer oder mehreren Düsen (18), die zum Abgeben des Fluids in einer feststehenden Wandung (4) des Bohrlöschgeräts (1) ausgebildet ist/sind und mit einer stromabwärts der Laufschaufeln (85) der Turbine (40) ausgebildeten, vorzugsweise ringförmigen Fluidkammer (30) kommuniziert/kommunizieren, um in einer Löschbetriebsart einen vorzugsweise zweiten Strömungsweg (102) auszubilden, um das Fluid nach Durchlaufen der Turbine (40) als Löschfluid in einen das Bohrlöschgerät (1) umgebenden Raum abzugeben,
    - wobei die Turbine (40) eine Axialturbine oder Rohrturbine ist und der Fluidanschluss (110) einen axialen Zustrom des Fluids in das Bohrlöschgerät (1) vorsieht.

2.  Bohrlöschgerät nach Anspruch 1
    **dadurch gekennzeichnet,**
    **dass** die Laufschaufeln (85) der Axialturbine oder Rohrturbine ein Tragflächenprofil, vorzugsweise ein NACA-Profil, aufweisen.

3.  Bohrlöschgerät nach Anspruch 1 oder 2
    **dadurch gekennzeichnet,**
    **dass** die Turbine (40) einen feststehenden Leitapparat (41) mit einer Vielzahl von Leitschaufeln (72) stromaufwärts einer Stufe der Laufschaufeln (85) aufweist, wobei die Leitschaufeln (72) mit der feststehenden Wandung (4) des Bohrlöschgeräts (1) verbunden oder einstückig damit ausgebildet sind, wobei die Leitschaufeln (72) und/oder die Laufschaufeln (85) ein Tragflächenprofil, vorzugsweise ein NACA-Profil, aufweisen.

4.  Bohrlöschgerät nach einem der vorstehenden Ansprüche,
    **dadurch gekennzeichnet,**
    **dass** die Turbine (40) auf einen Überdruck des Fluids zwischen dem Fluidanschluss (110) und der Umgebung von maximal etwa 16 bar ausgelegt ist.

5.  Bohrlöschgerät nach einem der vorstehenden Ansprüche,
    **dadurch gekennzeichnet,**
    **dass** die Turbine (40) ein zentrales kegelförmiges Anströmende (76) aufweist, um die von dem Fluidanschluss (110) kommende Strömung auf einen durch das Laufrad (42) und eine Wandung (4) der Turbine (40) oder des Bohrlöschgeräts (1) gebildeten Ringkanal oder auf einen diesem Ringkanal entsprechenden Ringkanal eines Leitapparats (41) mit Leitschaufeln (72) zu leiten.

6. Bohrlöschgerät nach einem der vorstehenden Ansprüche,
**dadurch gekennzeichnet,**
**dass** eine vorzugsweise auf einer Abtriebswelle (84) der Turbine (40) angeordnete, insbesondere kegelförmige Umlenkeinrichtung vorgesehen ist, welche ausgebildet ist, um einen von der der Turbine (40) kommenden Fluidstrom zu der wenigstens einen Abströmöffnung (20) zu lenken, und welche ein vorderes Ende der Fluidkammer (30) ausbildet.

7. Bohrlöschgerät nach einem der vorstehenden Ansprüche,
**dadurch gekennzeichnet,**
**dass** das Bohrlöschgerät (1) eine in etwa rohrartige Form aufweist, wobei der Fluidanschluss (110) an einem hinteren Stirnende des Bohrlöschgeräts (1) angeordnet ist und die Werkzeugaufnahme (13) an einem vorderen Stirnende des Bohrlöschgeräts (1) angeordnet ist.

8. Bohrlöschgerät nach einem der vorstehenden Ansprüche,
**dadurch gekennzeichnet,**
**dass** die wenigstens eine Abströmöffnung (20) ausgebildet ist, um das von der Turbine (40) kommende Fluid in wenigstens überwiegend radialer Richtung an die Umgebung des Bohrlöschgeräts (1) abzugeben.

9. Bohrlöschgerät nach einem der vorstehenden Ansprüche,
**dadurch gekennzeichnet,**
**dass** eine Verschlusseinrichtung (22) vorgesehen ist, welche einen rohrförmigen oder in etwa rohrförmigen Schieber (8) aufweist, der die wenigstens eine Abströmöffnung (20) wahlweise vollständig oder anteilig freigibt oder verdeckt.

10. Bohrlöschgerät nach Anspruch 9,
**dadurch gekennzeichnet,**
**dass** die Verschlusseinrichtung (22) eine Feder (9) aufweist, welche den Schieber (8) in Sperr-Richtung vorspannt.

11. Bohrlöschgerät nach Anspruch 9,
**dadurch gekennzeichnet,**
**dass** die Verschlusseinrichtung (22) ein Zugmittel (10), insbesondere Seilzug oder Bowdenzug, aufweist, welches an dem Schieber (8) in Freigaberichtung angreift.

12. Bohrlöschgerät nach einem der vorstehenden Ansprüche,
**dadurch gekennzeichnet,**
**dass** zwischen einer Abtriebswelle (84) der Turbine (40) und der Werkzeugaufnahme (13) ein Getriebe (5), insbesondere Untersetzungsgetriebe, angeordnet und in den Kraftweg gekoppelt oder koppelbar ist, wobei das Getriebe (5) vorzugsweise in der Form eines Planetengetriebes ausgebildet ist.

13. Bohrlöschgerät nach Anspruch 12,
**dadurch gekennzeichnet,**
**dass** das Getriebe (5) mehrere Über- oder Untersetzungsgänge aufweist.

14. Bohrlöschgerät nach einem der vorstehenden Ansprüche,
**dadurch gekennzeichnet,**
**dass** zwischen einer Abtriebswelle (84) der Turbine (40) und der Werkzeugaufnahme (13) ein Schlagwerk in den Kraftweg gekoppelt oder koppelbar ist.

15. Bohrlöschgerät nach einem der vorstehenden Ansprüche,
**dadurch gekennzeichnet,**
**dass** axial aufeinanderfolgend angeordnete Teile des Bohrlöschgeräts (1) über Verschraubungen (50, 52, 54, 55, 57, 62) miteinander verbunden sind, wobei die Verschraubungen (50, 52, 54, 55, 57, 62) jeweils durch ein Innengewinde in einer Wandung (4) des einen Teils und ein Außengewinde in einer Wandung (4) des anderen Teils gebildet sind.

16. Bohrlöschgerät nach Anspruch 15,
**dadurch gekennzeichnet,**

**dass** die Düsen (18) Nebeldüsen sind, welche zur Bildung eines feinen Sprühnebels ausgebildet sind.

17. Bohrlöschgerät nach Anspruch 15 oder 16,
**dadurch gekennzeichnet,**
**dass** die Düsen (18) durch schräge, vorzugsweise nach schräg vorn gerichtete, Bohrungen (60) in einer Wandung (4) des Bohrlöschgeräts (1) ausgebildet sind, wobei die Bohrungen (60) vorzugsweise eine zylindrische oder spitzkegelige Senkung (61) an ihrem stromabwärtigen Ende aufweisen.

18. Bohrlöschgerät nach einem der Ansprüche 15 bis 17,
**dadurch gekennzeichnet,**
**dass** an einer Außenfläche des Bohrlöschgeräts (1) axiale Nuten (19) ausgebildet sind, die sich von Austrittsöffnungen der Düsen (18) aus axial in Richtung des vorderen Endes des Bohrlöschgeräts (1) erstrecken.

19. Bohrlöschgerät nach einem der Ansprüche 15 bis 18,
**dadurch gekennzeichnet,**
**dass** die Düsenanordnung (12) wenigstens zwei Gruppen von Düsen (18) aufweist, deren Düsen (18) sich ringförmig über den Umfang des Bohrlöschgeräts (1) verteilt öffnen und in Umfangsrichtung und/oder in axialer Richtung zu den Düsen (18) der jeweils anderen Gruppe(n) versetzt sind.

20. Bohrlöschgerät nach einem der Ansprüche 15 bis 19,
**dadurch gekennzeichnet,**
**dass** die Düsenanordnung (12) wenigstens zwei Gruppen von Düsen (18) aufweist, deren Düsen (18) unterschiedliche Austrittswinkel aufweisen.

21. Bohrlöschgerät nach einem der Ansprüche 15 bis 20,
**dadurch gekennzeichnet,**
**dass** eine Umschalteinrichtung (22) vorgesehen ist, die zum Umschalten eines Strömungswegs des Fluids zwischen einer ersten Stellung, die den ersten Strömungsweg (101) freigibt und der Bohrbetriebsart entspricht, und einer zweiten Stellung, die den ersten Strömungsweg (101) sperrt und der Löschbetriebsart entspricht, ausgebildet ist.

22. Bohrlöschgerät nach Anspruch 21,
**dadurch gekennzeichnet,**
**dass** die Umschalteinrichtung (22) die Verschlusseinrichtung (22) nach einem der Ansprüche 9 bis 11 aufweist.

23. Bohrlöschgerät nach Anspruch 21 oder 22,
**dadurch gekennzeichnet,**
**dass** der erste Strömungsweg (101) an seiner engsten Stelle einen Strömungsquerschnitt aufweist, der größer oder viel größer als ein kumulierter Strömungsquerschnitt des zweiten Strömungswegs (102) an der jeweils engsten Stelle aller Düsen (18) ist, oder einen Strömungswiderstand aufweist, der kleiner oder viel kleiner als ein kumulierter Strömungswiderstand des zweiten Strömungswegs (102) durch alle Düsen (18) ist.

24. Bohrlöschgerät nach einem der Ansprüche 21 bis 23,
**dadurch gekennzeichnet,**
**dass** die Düsen (18) sowohl in der ersten als auch in der zweiten Stellung der Umschalteinrichtung (22) mit der Fluidkammer (30) kommunizieren.

25. Bohrlöschsystem (140) mit einem Bohrlöschgerät (1) nach einem der vorstehenden Ansprüche, weiter aufweisend eine Halterung (142) mit einer Gerätekupplung (147) und einem Schlauchanschluss (148), wobei der Schlauchanschluss (148) zur Verbindung mit einem Schlauch (143), vorzugsweise Feuerwehrschlauch, insbesondere in Form einer Flanschverbindung, ausgebildet ist und die Gerätekupplung (147) zur Verbindung mit dem Fluidanschluss (110) auf der Seite des Bohrlöschgeräts (1) an einer Zuströmöffnung (11) des Bohrlöschgeräts (1) ausgebildet ist.

26. Bohrlöschsystem nach Anspruch 25, wobei das Bohrlöschgerät (1) nach einem der Ansprüche 10 bis 26 ausgebildet ist, weiter aufweisend eine Auslösevorrichtung, die mit der Verschlussvorrichtung des Bohrlöschgeräts (1) in Wirkverbindung steht oder bringbar ist, wobei die Auslösevorrichtung vorzugsweise einen handbetätigbaren Hebel (146b) aufweist, wobei die Auslösevorrichtung vorzugsweise mit einem Zugmittel (10) der Verschlusseinrichtung (22) des Bohrlöschgeräts (1) gekoppelt oder koppelbar ist.

27. Bohrlöschsystem nach einem der Ansprüche 25 oder 26, wobei die Halterung (142) wenigstens einen Haltegriff (145, 146) und eine Schulterstütze (149) aufweist.

28. Bohrlöschsystem nach einem der Ansprüche 25 bis 27, wobei die Halterung (142) eine Maschinen- oder Geräte- oder Fahrzeugaufnahme aufweist.

29. Bohrlöschsystem nach einem der Ansprüche 25 bis 28, wobei die Halterung (142) einen sich zwischen dem Schlauchanschluss (148) und der Gerätekupplung (147) erstreckenden Rohrkörper (144) aufweist.

30. Bohrlöschsystem nach einem der Ansprüche 25 bis 29, weiter aufweisend einen Bohrer (130), der aufweist:

    einen Schaft (135) an einem hinteren Ende des Bohrers (130), der in die Werkzeugaufnahme (13) des Bohrlöschgeräts (1) einsetzbar ist,
    einen Kopf (131), der sich von dem Schaft (135) aus nach vorn erstreckt aufweist,
    eine Stirnfläche (134; 164), welche eine oder mehrere, vorzugsweise zwei oder vier, Schneidkanten (170) trägt, und
    eine Zentrierspitze (133; 165), die sich von der Stirnfläche (134; 164) aus nach vorn erstreckt.

31. Bohrlöschsystem nach Anspruch 30, wobei die Stirnfläche (134; 164) des Bohrers (130) um eine Mittelachse (M) rotierend einen Querschnitt abdeckt, der gegenüber einem größten Querschnitt des Bohrlöschgeräts (1) wenigstens in einem vorderen Bereich des Bohrlöschgeräts (1) ein Übermaß von wenigstens 1 mm, insbesondere wenigstens 2 mm, besonders bevorzugt mindestens 4 mm aufweist.

32. Bohrlöschsystem nach Anspruch 30 oder 31, wobei der Kopf (131) des Bohrers (130) eine Länge von mindestens 150 mm, vorzugsweise mindestens 250 mm, besonders bevorzugt mindestens 400 mm aufweist.

33. Bohrlöschsystem nach einem der Ansprüche 30 bis 32, wobei die Stirnfläche (134; 164) negativ oder stumpf angeschliffen ist, so dass die Schneidkante (170) gegenüber einer zu einer Bohrermittelachse (M) senkrechten Ebene einen Anschliffwinkel (A4) aufweist, dessen Betrag höchstens 10°, vorzugsweise höchstens 8°, insbesondere höchstens 6°, besonders bevorzugt höchstens 4° beträgt, oder flach ist.

34. Bohrlöschsystem nach einem der Ansprüche 30 bis 33, wobei ein Schneidwinkel der Schneidkante (170) weniger als 90° und/oder mehr als 60° beträgt.

35. Bohrlöschsystem nach einem der Ansprüche 30 bis 34, wobei der Kopf (131) als Plattenträger ausgebildet ist, der stirnseitig eine Nut zur Aufnahme einer Schneidplatte (160) aufweist, und wobei die Stirnfläche (164) mit der Schneidkante (170) und der Zentrierspitze (165) an der Schneidplatte (160) ausgebildet ist.

36. Bohrlöschsystem nach einem der Ansprüche 30 bis 35, wobei der Kopf (131) eine Wendelung aufweist, wobei die Wendelung vorzugsweise eine Anzahl von Wendelnuten (132) aufweist, die der Anzahl der Schneidkanten (170) entspricht.

37. Bohrlöschgerät nach einem der Ansprüche 1 bis 24 mit einem Bohrer (130) der aufweist:

    einen Schaft (135) an einem hinteren Ende des Bohrers (130), der in eine Werkzeugaufnahme einsetzbar ist, einen Kopf (131), der sich von dem Schaft (135) aus nach vorn erstreckt aufweist, eine Stirnfläche (134; 164), welche eine oder mehrere Schneidkanten (170) trägt, und eine Zentrierspitze (133; 165), die sich von der Stirnfläche (134; 164) aus nach vorn erstreckt, wobei der Bohrer (130) wenigstens eines der folgenden Merkmale aufweist:

      - die Stirnfläche (134; 164) des Bohrers (130) deckt um eine Mittelachse (M) rotierend einen Querschnitt mit einem Durchmesser von wenigstens 51 mm, insbesondere wenigstens 52 mm, besonders bevorzugt mindestens 54 mm ab,
      - der Kopf (131) des Bohrers (130) weist eine Länge von mindestens 150 mm, vorzugsweise mindestens 250 mm, besonders bevorzugt mindestens 400 mm auf,
      - der Kopf (131) des Bohrers (130) weist eine Länge von höchstens 1000 mm auf,
      - die Stirnfläche (134; 164) ist negativ oder stumpf angeschliffen, so dass die Schneidkante gegenüber einer zu einer Bohrermittelachse (M) senkrechten Ebene einen Anschliffwinkel (A4) aufweist, dessen Betrag höchstens 10°, vorzugsweise höchstens 8°, insbesondere höchstens 6°, besonders bevorzugt höchstens 4° beträgt, oder ist flach,
- ein Schneidwinkel der Schneidkante (170) beträgt wenigstens 60° und/oder höchstens 90° ausgebildet,
- der Kopf (131) ist als Plattenträger ausgebildet, der stirnseitig eine Nut zur Aufnahme einer Schneidplatte (160) aufweist, wobei die Stirnfläche (164) mit der Schneidkante (170) und der Zentrierspitze (165) an der Schneidplatte (160) ausgebildet ist,
- der Kopf (131) weist eine Wendelung auf, wobei die Wendelung vorzugsweise eine Anzahl von Wendelnuten (132) aufweist, die der Anzahl der Schneidkanten (170) entspricht.

**Claims**

1. Fire extinguishing drill (1), comprising:

   - a tool holder (13) configured for receiving a tool or for connecting to a tool,
   - a fluid connection (110) configured for supplying a fluid;
   - a turbine (40) having an impeller (42) comprising at least one stage of a plurality of impeller blades (85) and connected to or connectable to the tool holder (13), to rotatingly and/or impactingly drive the same in a driving mode using the fluid supplied via the fluid connection (110) as drive fluid;
   - at least one discharge opening (20) formed in a stationary wall (4) of the fire extinguishing drill (1) and communicating with a preferably annular fluid chamber (30) formed downstream of the impeller blades (85) of the turbine (40), and forming a first flow path (101) sized to deliver the fluid used as the working fluid for operating the turbine (40) in the drive mode to a vicinity of the fire extinguishing drill (1), and/or a nozzle assembly (12) having one or more nozzles (18) formed in a stationary wall (4) of the fire extinguishing drill (1) for delivering the fluid, and communicating with a preferably annular fluid chamber (30) formed downstream of the impeller blades (85) of the turbine (40) to form a preferably second flow path (102) in a fire extinguishing mode, to deliver the fluid into a space surrounding the fire extinguishing drill (1) as a fire extinguishing fluid after it has passed through the turbine (40),
   - wherein the turbine (40) is an axial turbine or a pipe turbine and the fluid connection (110) provides an axial inflow of the fluid into the fire extinguishing drill (1).

2. Fire extinguishing drill according to Claim 1,
   **characterized in that**
   the impeller blades (85) of the axial turbine or pipe turbine comprise an airfoil profile, preferably an NACA profile.

3. Fire extinguishing drill according to Claim 1 or 2,
   **characterized in that**
   the turbine (40) comprises a stationary guide apparatus (41) having a plurality of guide vanes (72) upstream of a stage of the impeller blades (85), wherein the guide vanes (72) are joined to or formed integrally with the stationary wall (4) of the fire extinguishing drill (1), wherein the guide vanes (72) and/or the impeller blades (85) comprise an airfoil profile preferably an NACA profile.

4. Fire extinguishing drill according to one of the preceding claims, **characterized in that**
   the turbine (40) is designed for a positive pressure of the fluid between the fluid connection (110) and ambient of no more than approximately 16 bar.

5. Fire extinguishing drill according to one of the preceding claims, **characterized in that**
   the turbine (40) comprises a central conical inflow end (76) to guide the flow from the fluid connection (110) onto an annular channel formed by the impeller (42) and a wall (4) of the turbine (40) or the fire extinguishing drill (1) or onto an annular channel corresponding to said annular channel of a guide apparatus (41) having guide vanes (72).

6. Fire extinguishing drill according to one of the preceding claims, **characterized in that**
   an in particular conical deflector device, preferably disposed on an output shaft (84) of the turbine (40), configured to direct a fluid flow from the turbine (40) to the at least one discharge opening (20) and forming a forward end of the fluid chamber (30), is provided.

7. Fire extinguishing drill according to one of the preceding claims, **characterized in that**
   the fire extinguishing drill (1) has an approximately tubular shape, wherein the fluid connection (110) is disposed on a rear face end of the fire extinguishing drill (1) and the tool holder (13) is disposed on a front face end of the fire extinguishing drill (1).

8. Fire extinguishing drill according to one of the preceding claims, **characterized in that**
the at least one discharge opening (20) is configured to deliver the fluid from the turbine (40) to the vicinity of the fire extinguishing drill (1) in an at least predominantly radial direction.

9. Fire extinguishing drill according to one of the preceding claims, **characterized in that**
a closure device (22), comprising a tubular or approximately tubular slider (8), which selectively fully or partially opens or covers the at least one discharge opening (20), is provided.

10. Fire extinguishing drill according to Claim 9, **characterized in that**
the closure device (22) comprises a spring (9) biasing the slider (8) in the blocking direction.

11. Fire extinguishing drill according to Claim 9, **characterized in that**
the closure device (22) comprises a pulling means (10), in particular a cable pull or Bowden cable, which acts on the slider (8) in the opening direction.

12. Fire extinguishing drill according to one of the preceding claims, **characterized in that**
a gear unit (5), in particular a reduction gear unit, is disposed between an output shaft (84) of the turbine (40) and the tool holder (13) and is coupled or coupleable into the force path, wherein the gear unit (5) is preferably configured in the form of a planetary gear unit.

13. Fire extinguishing drill according to Claim 12, **characterized in that**
the gear unit (5) comprises multiple increasing or reduction gears.

14. Fire extinguishing drill according to one of the preceding claims, **characterized in that**
an impact mechanism is coupled or coupleable into the force path between an output shaft (84) of the turbine (40) and the tool holder (13).

15. Fire extinguishing drill according to one of the preceding claims, **characterized in that**
parts of the fire extinguishing drill (1) disposed axially in sequence are connected to each other via screw connections (50, 52, 54, 55, 57, 62), wherein the screw connections (50, 52, 54, 55, 57, 62) are each formed by a female thread in a wall (4) of the one part and a male thread in a wall (4) of the other part.

16. Fire extinguishing drill according to Claim 15, **characterized in that**
the nozzles (18) are mist nozzles which are configured for forming a fine spray mist.

17. Fire extinguishing drill according to Claim 15 or 16, **characterized in that**
the nozzles (18) are formed by diagonal bores (60), preferably oriented diagonally forwards, in a wall (4) of the fire extinguishing drill (1), wherein the bores (60) preferably comprise a cylindrical or pointed conical recess (61) at their downstream end.

18. Fire extinguishing drill according to one of claims 15 to 17, **characterized in that**
axial grooves (19) are formed on an outer surface of the fire extinguishing drill (1), which extend axially from outlet openings of the nozzles (18) towards the forward end of the fire extinguishing drill (1).

19. Fire extinguishing drill according to one of claims 15 to 18, **characterized in that**
the nozzle assembly (12) comprises at least two groups of nozzles (18), the nozzles (18) of which open in annular distribution across the circumference of the fire extinguishing drill (1) and are offset from the nozzles (18) of the respective other group(s) in the circumferential direction and/or axial direction.

20. Fire extinguishing drill according to one of claims 15 to 19, **characterized in that**
the nozzle assembly (12) comprises at least two groups of nozzles (18), the nozzles (18) of which comprising different outlet angles.

21. Fire extinguishing drill according to one of claims 15 to 20, **characterized in that**
a switching device (22) is provided, which is configured for switching a flow path of the fluid between a first position, which opens the first flow path (101) and corresponds to the drilling mode, and a second position, which blocks the first flow path (101) and corresponds to the extinguishing mode.

22. Fire extinguishing drill according to Claim 21, **characterized in that**
the switching device (22) comprises the closure device (22) according to one of Claims 9 to 11.

23. Fire extinguishing drill according to Claim 21 or 22, **characterized in that**
that the first flow path (101), at its narrowest point, comprises a flow cross-section which is larger or significantly larger than a cumulative flow cross-section of the second flow path (102) at the respective narrowest point of all nozzles (18), or comprises a flow resistance which is lower or significantly lower than a cumulative flow resistance of the second flow path (102) through all nozzles (18).

24. Fire extinguishing drill according to one of claims 21 to 23, **characterized in that**
the nozzles (18) communicate with the fluid chamber (30) in both the first and the second position of the switching device (22).

25. Fire extinguishing drill system (140) having a fire extinguishing drill (1) according to one of the preceding claims, further comprising a carrier (142) having an equipment coupling (147) and a hose connection (148), wherein the hose connection (148) is configured for connecting to a hose (143), preferably a fire hose, in particular in the form of a flange connection, and the equipment coupling (147) is configured for connection with the fluid connection (110) on the side of the fire extinguishing drill (1) at an inflow opening (11) of the fire extinguishing drill (1).

26. Fire extinguishing drill system according to Claim 25, wherein the fire extinguishing drill (1) is configured according to one of Claims 10 to 26, further comprising a trigger device, operatively connected of connectable to the closure device of the fire extinguishing drill (1), wherein the trigger device preferably comprises a manually operable lever (146b), wherein the trigger device is preferably coupled or coupleable with a pulling means (10) of the closure device (22) of the fire extinguishing drill (1).

27. Fire extinguishing drill system according to one of Claims 25 or 26, wherein the carrier (142) comprises at least one handhold (145, 146) and a shoulder support (149).

28. Fire extinguishing drill system according to one of Claims 25 to 27, wherein the carrier (142) comprises a machine or equipment or vehicle holder.

29. Fire extinguishing drill system according to one of Claims 25 to 28, wherein the carrier (142) comprises a pipe body (144) extending between the hose connection (148) and the equipment coupling (147).

30. Fire extinguishing drill system according to one of Claims 25 to 29, further comprising a drill bit (130), which comprises:

a shaft (135) at a rear end of the drill bit (130), insertable in the tool holder (13) of the fire extinguishing drill (1), a head (131), extending forwards from the shaft (135) comprises,
an end face (134; 164) carrying one or more, preferably two or four cutting edges (170), and
a centering tip (133; 165) extending forwards from the end face (134; 164).

31. Fire extinguishing drill system according to Claim 30, wherein the end face (134; 164) of the drill bit (130), when rotating about a central axis (M), covers a cross-section, which comprises an oversize of at least 1 mm, in particular at least 2 mm, particularly preferably at least 4 mm compared to a largest cross-section of the fire extinguishing drill (1) in at least the front area of the fire extinguishing drill (1).

32. Fire extinguishing drill system according to Claim 30 or 31, wherein the head (131) of the drill bit (130) has a length of at least 150 mm, preferably at least 250 mm, particularly preferably at least 400 mm.

33. Fire extinguishing drill system according to one of Claims 30 to 32, wherein the end face (134; 164) is negatively or bluntly ground, such that the cutting edge (170) forms a grinding angle (A4) with a plane perpendicular to a drill bit central axis (M) having a value of no more than 10°, preferably no more than 8°, in particular no more than 6°, particularly preferably no more than 4°, or is flat.

34. Fire extinguishing drill system according to one of Claims 30 to 33, wherein a cutting angle of the cutting edge (170) is less than 90° and/or greater than 60°.

35. Fire extinguishing drill system according to one of Claims 30 to 34, wherein the head (131) is configured as a plate support comprising a groove for receiving a cutting plate (160) on its end face, and wherein the end face (164) with the cutting edge (170) and the centering tip (165) is formed on the cutting plate (160).

36. Fire extinguishing drill system according to one of Claims 30 to 35, wherein the head (131) comprises a winding, wherein the winding preferably comprises a number of winding grooves (132) corresponding to the number of cutting edges (170).

37. Fire extinguishing drill according to one of Claims 1 to 24, having a drill bit (130), which comprises:

a shaft (135) at a rear end of the drill bit (130), which is insertable in a tool holder,
a head (131) extending forward from the shaft (135) comprises,
an end face (134; 164) carrying one or more cutting edges (170), and
a centering tip (133; 165) extending forward from the end face (134; 164), wherein the drill bit (130) comprises at least one of the following features:

- the end face (134; 164) of the drill bit (130), when rotating about a central axis (M), covers a cross-section having a diameter of at least 51 mm, in particular at least 52 mm, particularly preferably at least 54 mm,
- the head (131) of the drill bit (130) has a length of at least 150 mm, preferably at least 250 mm, particularly preferably at least 400 mm,
- the head (131) of the drill bit (130) has a length of no more than 1000 mm,
- the end face (134; 164) is negatively or bluntly ground, such that the cutting edge forms a grinding angle (A4) with a plane perpendicular to a drill bit central axis (M) having a value of no more than 10°, preferably no more than 8°, in particular no more than 6°, particularly preferably no more than 4°, or is flat,
- a cutting angle of the cutting edge (170) is at least 60° and/or no more than 90° formed,
- the head (131) is configured as a plate support comprising a groove for receiving a cutting plate (160) on the end face side, wherein the end face (164) with the cutting edge (170) and the centering tip (165) is formed on the cutting plate (160),
- the head (131) comprises a winding, wherein the winding preferably comprises a number of winding grooves (132) corresponding to the number of cutting edges (170).

**Revendications**

1. Dispositif d'extinction de forage (1), comprenant :

- un réceptacle d'outil (13), qui est conçu pour recevoir un outil ou pour être relié à un outil,
- un point de raccordement fluidique (110), qui est conçu pour fournir un fluide ;
- une turbine (40) ayant un rotor (42), lequel rotor comprend au moins un étage d'une pluralité de pales de rotor (85) et est ou peut être relié au réceptacle d'outil (13) pour entraîner en rotation et/ou en pré-rotation le réceptacle d'outil, dans un mode de fonctionnement d'entraînement, au moyen du fluide fourni au moyen du point de raccordement fluidique (110) sous la forme d'un fluide d'entraînement ;
- au moins une ouverture de sortie (20) formée dans une paroi fixe (4) du dispositif d'extinction de forage (1) et communiquant avec une chambre de fluide (30), de préférence annulaire, formée en aval des pales de rotor (85) de la turbine (40), et qui forme un premier trajet d'écoulement (101) qui est dimensionné pour évacuer le fluide utilisé comme fluide d'entraînement pour le fonctionnement de la turbine (40) dans le mode d'entraînement à un environnement dispositif d'extinction de forage (1) et/ou un ensemble buse (12) avec une ou plusieurs buses (18), qui est/sont conçues pour évacuer le fluide dans une paroi fixe (4) du dispositif d'extinction de forage (1) et qui communique(nt) avec une chambre à fluide (30), de préférence annulaire, formée en aval des pales de rotor (85) de la turbine (40), afin de former, dans un mode d'extinction, un deuxième trajet d'écoulement (102), de préférence, pour évacuer le fluide, après avoir traversé la turbine (40), en tant que fluide d'extinction dans un espace entourant le dispositif d'extinction de forage (1),
- dans lequel la turbine (40) est une turbine axiale ou une turbine tubulaire et l'orifice de fluide (110) fournit une entrée axiale du fluide dans le dispositif d'extinction de forage (1).

2. Dispositif d'extinction de forage selon la revendication 1 **caractérisé en ce que**

les pales de rotor (85) de la turbine axiale ou de la turbine tubulaire présentent un profil d'aile, de préférence un profil NACA.

3. Appareil d'extinction de forage selon la revendication 1 ou 2 **caractérisé en ce que** la turbine (40) comprend un distributeur fixe (41) ayant une pluralité de pales fixes (72) en amont d'un étage des pales de rotor (85), les pales fixes (72) étant reliées à la paroi fixe (4) du dispositif d'extinction de forage (1) ou étant formées d'un seul tenant avec celle-ci, les pales fixes (72) et/ou les pales de rotor (85) ayant un profil d'aile, de préférence un profil NACA.

4. Dispositif d'extinction de forage selon l'une quelconque des revendications précédentes, **caractérisé en ce que** la turbine (40) est conçue pour une surpression du fluide entre l'orifice de fluide (110) et l'environnement d'environ 16 bars au maximum.

5. Dispositif d'extinction de forage selon l'une quelconque des revendications précédentes, **caractérisé en ce que** la turbine (40) présente une extrémité d'afflux (76) centrale en forme de cône pour diriger l'écoulement provenant de l'orifice de fluide (110) sur un canal annulaire formé par le rotor (42) et une paroi (4) de la turbine (40) ou du dispositif d'extinction de forage (1) ou sur un canal annulaire correspondant à ce canal annulaire d'un distributeur (41) avec des pales fixes (72).

6. Dispositif d'extinction de forage selon l'une quelconque des revendications précédentes, **caractérisé en ce qu'**un dispositif de déviation, en particulier conique, disposé de préférence sur un arbre de sortie (84) de la turbine (40), qui est conçu pour diriger un courant de fluide venant de la turbine (40) vers l'au moins une ouverture de sortie (20), et qui forme une extrémité avant de la chambre de fluide (30).

7. Dispositif d'extinction de forage selon l'une quelconque des revendications précédentes, **caractérisé en ce que** le dispositif d'extinction de forage (1) prévu présente une forme à peu près tubulaire, le raccord de fluide (110) étant disposé sur une extrémité frontale arrière de l'appareil d'extinction de forage (1) et le logement d'outil (13) étant disposé sur une extrémité frontale avant de l'appareil d'extinction de forage (1).

8. Dispositif d'extinction de forage selon l'une quelconque des revendications précédentes, **caractérisé en ce que** l'au moins une ouverture de sortie (20) est conçue pour évacuer le fluide provenant de la turbine (40) dans une direction au moins principalement radiale vers l'environnement du dispositif d'extinction de forage (1).

9. Dispositif d'extinction de forage selon l'une quelconque des revendications précédentes, **caractérisé en ce qu'**un dispositif d'obturation (22) prévu présente un coulisseau (8) tubulaire ou à peu près tubulaire qui libère ou recouvre au choix complètement ou partiellement l'au moins une ouverture de sortie (20).

10. Dispositif d'extinction de forage selon la revendication 9, **caractérisé en ce que** le dispositif d'obturation (22) présente un ressort (9) qui précontraint le coulisseau (8) dans la direction de blocage.

11. Dispositif d'extinction de forage selon la revendication 9, **caractérisé en ce que** le dispositif d'obturation (22) présente un moyen de traction (10), en particulier un câble ou un câble Bowden, qui agit sur le coulisseau (8) dans le sens de la libération.

12. Dispositif d'extinction de forage selon l'une quelconque des revendications précédentes, **caractérisé en ce qu'**un engrenage (5), en particulier un réducteur, est disposé entre un arbre de sortie (84) de la turbine (40) et le réceptacle d'outil (13) et est couplé ou peut être couplé dans la voie de force, l'engrenage (5) étant de préférence conçu sous la forme d'un engrenage planétaire.

13. Dispositif d'extinction de forage selon la revendication 12, **caractérisé en ce que** l'engrenage (5) présente plusieurs rapports de surmultiplication ou de réduction.

14. Dispositif d'extinction de forage selon l'une quelconque des revendications précédentes, **caractérisé en ce qu'**un mécanisme de percussion est couplé ou peut être couplé dans la voie de force entre un arbre de sortie (84) de la turbine (40) et le réceptacle d'outil (13).

15. Dispositif d'extinction de forage selon l'une quelconque des revendications précédentes, **caractérisé en ce que**

EP 4 034 262 B1

des parties du dispositif d'extinction de forage (1) disposées axialement les unes à la suite des autres sont reliées entre elles par des vissages (50, 52, 54, 55, 57, 62), les vissages (50, 52, 54, 55, 57, 62) étant formés chacun par un filetage intérieur dans une paroi (4) d'une partie et un filetage extérieur dans une paroi (4) de l'autre partie.

16. Dispositif d'extinction de forage selon la revendication 15, **caractérisé en ce que**
les buses (18) sont des buses à brouillard qui sont conçues pour former un fin brouillard de pulvérisation.

17. Dispositif d'extinction de forage selon la revendication 15 ou 16, **caractérisé en ce que**
les buses (18) sont formées par des alésages (60) obliques, de préférence dirigés vers l'avant en oblique, dans une paroi (4) du dispositif d'extinction de forage (1), les alésages (60) présentant de préférence un fraisage (61) cylindrique ou conique pointu à leur extrémité aval.

18. Appareil d'extinction de forage selon l'une quelconque des revendications 15 à 17, **caractérisé en ce que**
des rainures axiales (19) sont formées sur une surface extérieure du dispositif d'extinction de forage (1), qui s'étendent axialement à partir d'ouvertures de sortie des buses (18) en direction de l'extrémité avant du dispositif d'extinction de forage (1).

19. Appareil d'extinction de forage selon l'une quelconque des revendications 15 à 18, **caractérisé en ce que**
l'agencement de buses (12) présente au moins deux groupes de buses (18) dont les buses (18) qui s'ouvrent en étant réparties en forme d'anneau sur la périphérie du dispositif d'extinction de forage (1) et sont décalées dans la direction périphérique et/ou dans la direction axiale par rapport aux buses (18) de l'autre ou des autres groupes respectifs.

20. Appareil d'extinction de forage selon l'une quelconque des revendications 15 à 19, **caractérisé en ce que**
l'agencement de buses (12) présente au moins deux groupes de buses (18) dont les buses (18) qui présentent des angles de sortie différents.

21. Dispositif d'extinction de forage selon l'une quelconque des revendications 15 à 20,
**caractérisé en ce**
**qu'**un dispositif de commutation (22) prévu est conçu pour commuter un trajet d'écoulement du fluide entre une première position qui libère le premier trajet d'écoulement (101) et correspond au mode de fonctionnement de forage, et une deuxième position qui bloque le premier trajet d'écoulement (101) et correspond au mode de fonctionnement d'extinction.

22. Dispositif d'extinction de forage selon la revendication 21, **caractérisé en ce que**
le dispositif de commutation (22) comporte le dispositif d'obturation (22) selon l'une des revendications 9 à 11.

23. Dispositif d'extinction de forage selon la revendication 21 ou 22, **caractérisé en ce que**
le premier trajet d'écoulement (101) présente à son endroit le plus étroit une section transversale d'écoulement qui est supérieure ou beaucoup plus grande qu'une section transversale d'écoulement cumulée du deuxième trajet d'écoulement (102) à l'endroit respectivement le plus étroit de toutes les buses (18), ou présente une résistance à l'écoulement qui est inférieure ou beaucoup plus petite qu'une résistance à l'écoulement cumulée du deuxième trajet d'écoulement (102) à travers toutes les buses (18).

24. Appareil d'extinction de forage selon l'une quelconque des revendications 21 à 23, **caractérisé en ce que**
les buses (18) communiquent avec la chambre de fluide (30) aussi bien dans la première que dans la deuxième position du dispositif de commutation (22).

25. Système d'extinction de forage (140) avec un dispositif d'extinction de forage (1) selon l'une des revendications précédentes, présentant en outre un support (142) avec un accouplement de dispositif (147) et un raccord de tuyau (148), le raccord de tuyau (148) étant destiné à être relié à un tuyau (143), de préférence un tuyau d'incendie, en particulier sous la forme d'un raccord à bride, et l'accouplement de dispositif (147) est conçu pour être relié au raccord de fluide (110) sur le côté du dispositif d'extinction de forage (1) au niveau d'une ouverture d'arrivée (11) du dispositif d'extinction de forage (1).

26. Système d'extinction de forage selon la revendication 25, dans lequel le dispositif d'extinction de forage (1) est réalisé selon l'une des revendications 10 à 26, présentant en outre un dispositif de déclenchement qui est ou peut être amené en liaison active avec le dispositif d'obturation du dispositif d'extinction de forage (1), le dispositif de déclenchement présentant de préférence un levier (146b) pouvant être actionné manuellement, le dispositif de déclenchement étant de préférence couplé ou pouvant être couplé à un moyen de traction (10) du dispositif d'obturation (22) du dispositif d'extinction de forage (1).

27. Système d'extinction de forage selon l'une des revendications 25 ou 26, dans lequel le support (142) comprend au moins une poignée de préhension (145, 146) et un épaulement (149).

28. Système d'extinction de forage selon l'une quelconque des revendications 25 à 27, dans lequel le support (142) comporte un logement pour une machine ou un dispositif ou un véhicule.

29. Système d'extinction de forage selon l'une quelconque des revendications 25 à 28, dans lequel le support (142) comprend un corps tubulaire (144) s'étendant entre le raccord de tuyau (148) et le raccord de dispositif (147).

30. Système d'extinction de forage selon l'une quelconque des revendications 25 à 29, comprenant en outre un foret (130) comprenant :

    une tige (135) à une extrémité arrière du foret (130), qui peut être insérée dans le réceptacle d'outil (13) du dispositif d'extinction de forage (1), une tête (131) qui s'étend vers l'avant à partir de la tige (135), une face d'extrémité (134 ; 164) qui porte une ou plusieurs, de préférence deux ou quatre, arêtes de coupe (170), et une pointe de centrage (133 ; 165) qui s'étend vers l'avant à partir de la surface frontale (134 ; 164).

31. Système d'extinction de forage selon la revendication 30, dans lequel la surface frontale (134 ; 164) du foret (130) couvre, en tournant autour d'un axe central (M), une section transversale qui présente, par rapport à une section transversale la plus grande du dispositif d'extinction de forage (1), au moins dans une zone avant du dispositif d'extinction de forage (1), un surdimensionnement d'au moins 1 mm, en particulier d'au moins 2 mm, de manière particulièrement préférée d'au moins 4 mm.

32. Système d'extinction de forage selon la revendication 30 ou 31, dans lequel la tête (131) du foret (130) présente une longueur d'au moins 150 mm, de préférence d'au moins 250 mm, de manière particulièrement préférée d'au moins 400 mm.

33. Système d'extinction de forage selon l'une des revendications 30 à 32, dans lequel la face frontale (134 ; 164) est affûtée négativement ou émoussée, de sorte que l'arête de coupe (170) présente, par rapport à un plan perpendiculaire à un axe central (M) du foret, un angle d'affûtage (A4) dont la valeur est au plus égale à 10°, de préférence au plus égale à 8°, en particulier au plus égale à 6°, de manière particulièrement préférée au plus égale à 4°, ou est plate.

34. Système d'extinction de forage selon l'une quelconque des revendications 30 à 33, dans lequel un angle de coupe de l'arête de coupe (170) est inférieur à 90° et/ou supérieur à 60°.

35. Système d'extinction de forage selon l'une des revendications 30 à 34, dans lequel la tête (131) est réalisée sous la forme d'un support de plaque qui présente sur sa face frontale une rainure destinée à recevoir une plaque de coupe (160), et dans lequel la face frontale (164) est réalisée avec l'arête de coupe (170) et la pointe de centrage (165) sur la plaque de coupe (160).

36. Système d'extinction de forage selon l'une quelconque des revendications 30 à 35, dans lequel la tête (131) comprend une hélice, l'hélice présentant de préférence un nombre de rainures d'hélice (132) correspondant au nombre d'arêtes de coupe (170).

37. Dispositif d'extinction de forage selon l'une quelconque des revendications 1 à 24, comprenant un foret (130) qui comprend :

    une tige (135) à une extrémité arrière du foret (130), qui peut être insérée dans un réceptacle d'outil, une tête (131) s'étendant vers l'avant à partir de la tige (135), une face d'extrémité (134 ; 164) portant une ou plusieurs arêtes de coupe (170), et une pointe de centrage (133 ; 165) s'étendant vers l'avant à partir de la face d'extrémité (134 ; 164), le foret (130) ayant au moins une des caractéristiques suivantes :

        - la surface frontale (134 ; 164) du foret (130) couvre, en tournant autour d'un axe central (M), une section transversale d'un diamètre d'au moins 51 mm, en particulier d'au moins 52 mm, de manière particulièrement préférée d'au moins 54 mm,

- la tête (131) du foret (130) présente une longueur d'au moins 150 mm, de préférence d'au moins 250 mm, de manière particulièrement préférée d'au moins 400 mm,
- la tête (131) du foret (130) présente une longueur maximale de 1000 mm,
- la face frontale (134 ; 164) est affûtée négativement ou émoussée, de sorte que l'arête de coupe présente, par rapport à un plan perpendiculaire à un axe central (M) du foret, un angle d'affûtage (A4) dont la valeur est au plus égale à 10°, de préférence au plus égale à 8°, en particulier au plus égale à 6°, de manière particulièrement préférée au plus égale à 4°, ou est plate,
- un angle de coupe de l'arête de coupe (170) est formé d'au moins 60° et/ou d'au plus 90°,
- la tête (131) est réalisée sous la forme d'un support de plaque qui présente sur sa face frontale une rainure destinée à recevoir une plaquette de coupe (160), la face frontale (164) étant réalisée avec l'arête de coupe (170) et la pointe de centrage (165) sur la plaque de coupe (160),
- la tête (131) présente une hélice, l'hélice présentant de préférence un nombre de rainures d'hélice (132) correspondant au nombre d'arêtes de coupe (170).

Fig. 1

Fig. 2

Fig. 3a

Fig. 3b

Fig. 3c

EP 4 034 262 B1

Fig. 4a

Fig. 4b

Fig. 4c

EP 4 034 262 B1

Fig. 5a

Fig. 5b

Fig. 5c

Fig. 6a

Fig. 6b

Fig. 7a

Fig. 7b

Fig. 7c

Fig. 8a

Fig. 8b

Fig. 8c

Fig. 9

Fig. 10a

Fig. 10b

Fig. 11a

Fig. 11b

Fig. 12

Fig. 13

Fig. 14a

Fig. 14b

Fig. 14c

Fig. 15a

Fig. 15b

Fig. 15c

Fig. 16

Fig. 17b

Fig. 17a

Fig. 17c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3865194 A
- US 9630038 B2
- DE 10152757 A1